# EUROPÄISCHE PATENTSCHRIFT

(11) **EP 3 976 432 B1**
(45) Veröffentlichungstag und Bekanntmachung des Hinweises auf die Patenterteilung: **04.12.2024**
(21) Anmeldenummer: 20723811.4
(22) Anmeldetag: 28.04.2020
(51) Int. Cl.: B60W 30/14

(54) **VERFAHREN ZUR BESTIMMUNG EINER SETZGESCHWINDIGKEIT EINES ASSISTENZSYSTEMS ZUR REGELUNG EINER LÄNGSBEWEGUNG EINES FAHRZEUGS**
METHOD FOR DETERMINING A SET SPEED OF AN ASSISTANCE SYSTEM FOR REGULATING A LONGITUDINAL MOVEMENT OF A VEHICLE
PROCÉDÉ POUR DÉTERMINER UNE VITESSE DE RÉGLAGE D'UN SYSTÈME D'ASSISTANCE EN VUE DE RÉGULER UN DÉPLACEMENT LONGITUDINAL D'UN VÉHICULE

(30) Priorität: 03.06.2019 DE 102019003892
(43) Veröffentlichungstag der Anmeldung: 06.04.2022
(73) Patentinhaber: Mercedes-Benz Group AG, 70372 Stuttgart (DE)
(72) Erfinder: REHBORN, Hubert, 71069 Sindelfingen (DE); HESSE, Verena, 70174 Stuttgart (DE); KOLLER, Micha, 72124 Pliezhausen (DE)
(74) Vertreter: Novagraaf Group
(86) Internationale Anmeldenummer: PCT/EP2020/061668
(87) Internationale Veröffentlichungsnummer: WO 2020/244847

(56) Entgegenhaltungen:
- DE-A1- 102008 041 174
- DE-A1- 102012 216 875
- DE-A1- 102017 205 893
- DE-B3- 102005 045 891

## Beschreibung

Die Erfindung betrifft ein Verfahren zur Bestimmung einer Setzgeschwindigkeit eines Assistenzsystems zur Regelung einer Längsbewegung eines Fahrzeugs.

Aus dem Stand der Technik sind Verfahren zur Bestimmung einer Setzgeschwindigkeit für Assistenzsysteme zur Regelung der Längsbewegung von Fahrzeugen, beispielsweise für Geschwindigkeitsregelanlagen, allgemein bekannt. Solche Assistenzsysteme sind auf dem Markt in verschiedenen Ausgestaltungen verfügbar: als Tempomat und als Abstandsregeltempomat. Die Setzgeschwindigkeit ist bei diesen Assistenzsystemen eine gewünschte Sollgeschwindigkeit, auf die die Geschwindigkeit des Fahrzeugs geregelt werden soll. Bei einem Tempomat wird die die Geschwindigkeit des Fahrzeugs konstant auf die Setzgeschwindigkeit geregelt. Die Verkehrssituation vor dem Fahrzeug wird vom Tempomat dabei nicht berücksichtigt. Der Fahrzeugführer ist daher für die Abstandshaltung zu vorausfahrenden Fahrzeugen selber verantwortlich. Ein Abstandsregeltempomat, auch ACC-System genannt (ACC = adaptive cruise control), berücksichtigt hingegen auch die Verkehrssituation vor dem Fahrzeug. Er regelt die Geschwindigkeit des Fahrzeugs auf die Setzgeschwindigkeit, sofern die Einhaltung der Setzgeschwindigkeit möglich ist, ohne einen vorgebaren Sollabstand zu einem vorausfahrenden Fahrzeug zu unterschreiten. Wenn das vorausfahrende Fahrzeug die Einhaltung der Setzgeschwindigkeit nicht zulässt, wird die Regelung als Abstandsregelung ausgeführt, bei der das Fahrzeug dem vorausfahrenden Fahrzeug in dem vorgegebenen Sollabstand folgt. Die Geschwindigkeit des Fahrzeugs wird somit an die Geschwindigkeit des vorausfahrenden Fahrzeugs angepasst.

Bei den bekannten Assistenzsystemen wird die Setzgeschwindigkeit üblicherweise vom Fahrzeugführer vorgegeben. Bekannt sind aber auch Assistenzsysteme, die beispielsweise durch Verkehrszeichenerkennung oder anhand von digitalen Kartendaten Bereiche mit begrenzter zulässiger Höchstgeschwindigkeit erkennen und eine Anpassung der Setzgeschwindigkeit an die zulässige Höchstgeschwindigkeit vornehmen, um eine unzulässige Geschwindigkeitsüberschreitung zu vermeiden. Ein derartiges Assistenzsystem ist beispielsweise aus der DE 10 2015 006 411 A1 bekannt.

Aus der DE 10 2017 2058 893 A1 ist ein Verfahren zur Regelung der Geschwindigkeit eines Fahrzeugs bekannt, bei dem ermittelt wird, ob und ggf. in welcher Entfernung sich vor dem Fahrzeug eine Situation mit reduzierter Verkehrsgeschwindigkeit befindet, beispielsweise ein Stau, und bei dem ein der Regelung zugrunde liegender Sollwert in Abhängigkeit des Ergebnisses dieser Ermittlung angepasst wird.

Aus dem Stand der Technik ist, wie in der DE 10 2009 059 128 A1 beschrieben, ein Verfahren zur Verkehrszustandsbestimmung in einem Fahrzeug bekannt. In diesem Verfahren wird mittels einer Straßenkarte und einer Ortungsvorrichtung eine Ortsinformation gewonnen, es werden Verkehrsinformationen mittels eines Verkehrsinformationsempfängers ermittelt, die Fahrroute zu einem Zielpunkt wird anhand der Ortsinformation, der Straßenkarte sowie der Verkehrsinformationen ermittelt und es werden daraus zyklisch Streckenvorausschauinformationen bestimmt. Aufgrund der Streckenvorausschauinformationen wird die Fahrroute aufgeteilt in Streckenabschnitte mit individuellen Verkehrszuständen. Jedem Streckenabschnitt wird eine Streckenabschnittsinformation zugeordnet, wobei jede Streckenabschnittsinformation eine Verkehrszustandsinformation sowie eine Ortsinformation des Streckenabschnitts enthält. Die Streckenabschnittsinformationen werden ausgegeben.

Aus der DE 10 2012 216 875 A1 ist ein Verfahren zur Ermittlung einer Fahrstrategie für ein Fahrzeug bekannt. Die Ermittlung der Fahrstrategie umfasst dabei die Ermittlung einer Menge von ortsbezogenen Sollgeschwindigkeitswerten für eine vorausliegenden Fahrstrecke. Die Sollgeschwindigkeitswerte werden dabei derart ermittelt, dass sie innerhalb eines vorgegebenen Geschwindigkeitsbandes liegen, wobei die Bandgrenzen des Geschwindigkeitsbandes an die Verkehrsdichte auf der Fahrstrecke angepasst werden.

Aus der DE 10 2008 041 174 A1 ist ein Verfahren zur Beeinflussung der Geschwindigkeit eines Fahrzeugs bekannt, bei dem Informationen über eine vorausliegende Verkehrslage ermittelt werden und bei dem die ermittelten Informationen bei der Beeinflussung der Geschwindigkeit berücksichtigt werden. Bei den ermittelten Informationen handelt es insbesondere um Informationen über die Entfernung zu einen vorausliegenden Stau und über Veränderungen der Staulänge.

Der Erfindung liegt die Aufgabe zu Grunde, ein gegenüber dem Stand der Technik verbessertes Verfahren zur Bestimmung einer Setzgeschwindigkeit eines Assistenzsystems zur Regelung einer Längsbewegung eines Fahrzeugs anzugeben.

Die Aufgabe wird erfindungsgemäß gelöst durch ein Verfahren zur Bestimmung einer Setzgeschwindigkeit eines Assistenzsystems zur Regelung einer Längsbewegung eines Fahrzeugs mit den Merkmalen des Anspruchs 1.

Vorteilhafte Ausgestaltungen der Erfindung sind Gegenstand der Unteransprüche.

In einem erfindungsgemäßen Verfahren zur Bestimmung einer Setzgeschwindigkeit eines Assistenzsystems zur Regelung einer Längsbewegung eines Fahrzeugs wird eine dem Fahrzeug vorausliegende Fahrstrecke mit einer vorgegebenen Gesamtstreckenlänge dahingehend geprüft, ob auf dieser Gesamtstreckenlänge ein oder mehrere Bereiche mit einem Verkehrszustand "freier Verkehr", ein oder mehrere Bereiche mit einem Verkehrszustand "zähfließender und/oder stockender Verkehr" und ein oder mehrere Bereiche mit einem Verkehrszustand "gestauter Verkehr" vorliegen, und es wird eine Streckenlänge des jeweiligen vorliegenden Bereichs ermittelt. In Abhängigkeit hiervon wird entschieden, insbesondere automatisch entschieden, ob die Setzgeschwindigkeit vom Assistenzsystem festgelegt werden soll, und wenn ja, auf welchen von mehreren vorgegebenen Geschwindigkeitswerten die Setzgeschwindigkeit gesetzt werden soll. Mittels dieses Verfahrens wird insbesondere bestimmt, ob eine Setzgeschwindigkeit auf der vorausliegenden Fahrstrecke erforderlich ist, und wenn ja, wird bestimmt, welcher von mehreren vorgegebenen Geschwindigkeitswerten der Setzgeschwindigkeit erforderlich ist. Vorteilhafterweise wird dann eine entsprechende Anweisung an das Assistenzsystem übermittelt, insbesondere dann, wenn dieses die Setzgeschwindigkeit festlegen soll, d. h. es wird dann vorteilhafterweise die Anweisung an das Assistenzsystem übermittelt, dass es die Setzgeschwindigkeit festlegen soll, und auf welchen von den mehreren vorgegebenen Geschwindigkeitswerten es die Setzgeschwindigkeit setzen soll. Mittels dieses Verfahrens wird somit vorteilhafterweise auch das Assistenzsystem angewiesen, insbesondere gesteuert und/oder geregelt, um, wenn dies ermittelt wurde, die Setzgeschwindigkeit festzulegen, und zwar auf einen von den mehreren vorgegebenen Geschwindigkeitswerten.

Mittels des erfindungsgemäßen Verfahrens werden somit in Abhängigkeit vom im Fahrzeug empfangenen Verkehrszustand und dessen zeitlich-räumlicher Abfolge auf der vorausliegenden Fahrstrecke Regeln aufgestellt, wie Parameter, insbesondere die Setzgeschwindigkeit, des Assistenzsystems verbessert eingestellt werden können. Mittels dieses Verfahrens wird detailliert auf Basis der oben beschriebenen Regeln festgelegt, mit welchen Parametern, insbesondere mit welcher Setzgeschwindigkeit, das Assistenzsystem, beispielsweise ein Bremsassistenzsystem und/oder eine Abstands- und/oder Geschwindigkeitsregelanlage, gesteuert und/oder geregelt wird, d. h. insbesondere ob, und wenn ja, welche Setzgeschwindigkeit dieses Assistenzsystem setzen soll. Diese Entscheidung wird zweckmäßigerweise an das Assistenzsystem übermittelt, insbesondere als eine entsprechende Vorgabe oder Anweisung, insbesondere Steuerungsanweisung übermittelt, und dann vom Assistenzsystem entsprechend umgesetzt. Das Assistenzsystem reagiert somit auf die vorausliegenden Verkehrszustände. Insbesondere bremst es das Fahrzeug gegebenenfalls entsprechend ab, insbesondere auf die vorgegebene Setzgeschwindigkeit, d. h. auf den jeweils vorgegebenen Geschwindigkeitswert der Setzgeschwindigkeit. Das Verfahren ermöglicht somit insbesondere eine verkehrszustandsabhängige Bremsassistenz, insbesondere eine vorausschauende Bremsassistenz mit dynamischen Verkehrsinformationen.

Die Gesamtstreckenlänge der vorausliegenden Fahrstrecke, welche geprüft wird, beträgt beispielsweise mindestens 2,5 km, insbesondere mindestens 3 km, insbesondere mindestens 3,5 km, insbesondere ist sie größer als 3,5 km. Dadurch wird eine realistische Einschätzung der vorausliegenden Verkehrszustände und insbesondere eine rechtzeitige Reaktion auf diese vorausliegenden Verkehrszustände durch das entsprechende Festlegen des Geschwindigkeitswertes für die Setzgeschwindigkeit, wenn dies entsprechend der genannten Kriterien erforderlich ist, ermöglicht.

Als Geschwindigkeitswerte für die Setzgeschwindigkeit werden beispielsweise ein niedriger Geschwindigkeitswert, insbesondere 80 km/h, ein mittlerer Geschwindigkeitswert, insbesondere 100 km/h, und ein hoher Geschwindigkeitswert, insbesondere 120 km/h, vorgegeben. In anderen Ausführungsformen des Verfahrens können beispielsweise noch weitere Geschwindigkeitswerte zwischen dem niedrigen und dem hohen Geschwindigkeitswert vorgesehen sein. Durch diese verschiedenen Geschwindigkeitswerte wird eine an die jeweilige Verkehrszustandssituation auf der vorausliegenden Fahrstrecke angepasste Setzgeschwindigkeit ermöglicht.

Beispielsweise wird insbesondere in Abhängigkeit von einer Art und/oder Anzahl und/oder Reihenfolge und/oder Streckenlänge der Bereiche entlang der Fahrstrecke entschieden, ob die Setzgeschwindigkeit vom Assistenzsystem festgelegt werden soll und auf welchen von mehreren vorgegebenen Geschwindigkeitswerten die Setzgeschwindigkeit gesetzt werden soll. Diese Entscheidung fällt somit für die verschiedenen möglichen Zusammensetzungen der Verkehrssituation auf der vorausliegenden Fahrstrecke unterschiedlich aus, angepasst an die jeweilige Verkehrssituation. Beispielsweise wird, wenn in einem, insbesondere parametrierbaren, Abstand von beispielsweise 2 km auf den Verkehrszustand freier Verkehr der Verkehrszustand gestauter Verkehr mit Fahrzeugstillstand in weniger als, insbesondere parametrierbaren, 500 m folgt, die Setzgeschwindigkeit im freien Verkehr auf den, insbesondere parametrierbaren, niedrigen Geschwindigkeitswert von beispielsweise 80 km/h begrenzt und das Fahrzeug entsprechend abgebremst. Beispielsweise wird, wenn in einem, insbesondere parametrierbaren, Abstand von beispielsweise 2 km auf den Verkehrszustand freier Verkehr der Verkehrszustand zähfließender und/oder stockender Verkehr mit geringen Geschwindigkeiten und mindestens 500 m Länge folgt, wird die Setzgeschwindigkeit im freien Verkehr auf den, insbesondere parametrierbaren, hohen Geschwindigkeitswert von beispielsweise 120 km/h begrenzt und das Fahrzeug entsprechend geringer, insbesondere kaum, abgebremst.

Erfindungsgemäß wird entschieden, dass die Setzgeschwindigkeit vom Assistenzsystem festgelegt werden soll, wenn zu Beginn der geprüften vorausliegenden Fahrstrecke ein Bereich mit dem Verkehrszustand freier Verkehr vorliegt, dessen Streckenlänge kleiner ist als ein vorgegebener Streckengrenzwert für den Bereich mit dem Verkehrszustand freier Verkehr, und
- direkt danach ein Bereich mit dem Verkehrszustand gestauter Verkehr vorliegt, dessen Streckenlänge größer ist als ein vorgegebener Streckengrenzwert für den Bereich mit dem Verkehrszustand gestauter Verkehr, oder
- direkt danach ein Bereich mit dem Verkehrszustand zähfließender und/oder stockender Verkehr vorliegt, dessen Streckenlänge größer ist als ein vorgegebener kleiner Streckengrenzwert für den Bereich mit dem Verkehrszustand zähfließender und/oder stockender Verkehr, oder
- direkt danach ein Bereich mit dem Verkehrszustand zähfließender und/oder stockender Verkehr vorliegt, dessen Streckenlänge kleiner ist als der vorgegebene kleine Streckengrenzwert für den Bereich mit dem Verkehrszustand zähfließender und/oder stockender Verkehr, und direkt danach ein Bereich mit dem Verkehrszustand gestauter Verkehr vorliegt, dessen Streckenlänge größer ist als der vorgegebene Streckengrenzwert für den Bereich mit dem Verkehrszustand gestauter Verkehr, oder
- direkt danach ein Bereich mit dem Verkehrszustand zähfließender und/oder stockender Verkehr vorliegt, dessen Streckenlänge kleiner ist als der vorgegebene kleine Streckengrenzwert für den Bereich mit dem Verkehrszustand zähfließender und/oder stockender Verkehr, direkt danach ein Bereich mit dem Verkehrszustand gestauter Verkehr vorliegt, dessen Streckenlänge kleiner ist als der vorgegebene Streckengrenzwert für den Bereich mit dem Verkehrszustand gestauter Verkehr, und direkt danach ein Bereich mit dem Verkehrszustand zähfließender und/oder stockender Verkehr vorliegt, dessen Streckenlänge kleiner ist als der vorgegebene kleine Streckengrenzwert für den Bereich mit dem Verkehrszustand zähfließender und/oder stockender Verkehr, oder
- direkt danach ein Bereich mit dem Verkehrszustand gestauter Verkehr vorliegt, dessen Streckenlänge kleiner ist als der vorgegebene Streckengrenzwert für den Bereich mit dem Verkehrszustand gestauter Verkehr, direkt danach ein Bereich mit dem Verkehrszustand zähfließender und/oder stockender Verkehr vorliegt, dessen Streckenlänge kleiner ist als der vorgegebene kleine Streckengrenzwert für den Bereich mit dem Verkehrszustand zähfließender und/oder stockender Verkehr, und direkt danach ein Bereich mit dem Verkehrszustand gestauter Verkehr vorliegt, dessen Streckenlänge kleiner ist als der vorgegebene Streckengrenzwert für den Bereich mit dem Verkehrszustand gestauter Verkehr, oder
- direkt danach ein Bereich mit dem Verkehrszustand gestauter Verkehr vorliegt, dessen Streckenlänge kleiner ist als der vorgegebene Streckengrenzwert für den Bereich mit dem Verkehrszustand gestauter Verkehr, und direkt danach ein Bereich mit dem Verkehrszustand zähfließender und/oder stockender Verkehr vorliegt, dessen Streckenlänge größer ist als der vorgegebene kleine Streckengrenzwert für den Bereich mit dem Verkehrszustand zähfließender und/oder stockender Verkehr.

Für diese Verkehrssituationen ist eine Annäherung des Fahrzeugs an die jeweilige Verkehrssituation mit einer vorgegebenen Setzgeschwindigkeit sinnvoll, um eine Kollision mit anderen vorausfahrenden oder sich an einem vorausliegenden Stauende befindenden Fahrzeugen zu vermeiden. Die Vorgabe der jeweiligen Setzgeschwindigkeit und somit die Reduzierung einer jeweiligen Geschwindigkeit des Fahrzeugs auf diese Setzgeschwindigkeit erfolgt dann zweckmäßigerweise im Bereich mit dem Verkehrszustand freier Verkehr, insbesondere zu Beginn der geprüften vorausliegenden Fahrstrecke und/oder zu einem frühestmöglichen Zeitpunkt nach der getroffenen Entscheidung.

Beispielsweise wird entschieden, dass die Setzgeschwindigkeit auf den niedrigen Geschwindigkeitswert, insbesondere 80 km/h, gesetzt werden soll, wenn zu Beginn der geprüften vorausliegenden Fahrstrecke ein Bereich mit dem Verkehrszustand freier Verkehr vorliegt, dessen Streckenlänge kleiner ist als der vorgegebene Streckengrenzwert für den Bereich mit dem Verkehrszustand freier Verkehr, und
- direkt danach ein Bereich mit dem Verkehrszustand gestauter Verkehr vorliegt, dessen Streckenlänge größer ist als der vorgegebene Streckengrenzwert für den Bereich mit dem Verkehrszustand gestauter Verkehr, oder
- direkt danach ein Bereich mit dem Verkehrszustand zähfließender und/oder stockender Verkehr vorliegt, dessen Streckenlänge kleiner ist als der vorgegebene kleine Streckengrenzwert für den Bereich mit dem Verkehrszustand zähfließender und/oder stockender Verkehr, und direkt danach ein Bereich mit dem Verkehrszustand gestauter Verkehr vorliegt, dessen Streckenlänge größer ist als der vorgegebene Streckengrenzwert für den Bereich mit dem Verkehrszustand gestauter Verkehr. Diese vorausliegenden Verkehrssituationen erfordern ein besonders vorsichtiges Annähern und daher ein Reduzieren auf eine niedrige Geschwindigkeit, um eine Kollision mit anderen vorausfahrenden oder sich an einem vorausliegenden Stauende befindenden Fahrzeugen zu vermeiden.

Beispielsweise wird entschieden, dass die Setzgeschwindigkeit auf den mittleren Geschwindigkeitswert, insbesondere 100 km/h, gesetzt werden soll, wenn zu Beginn der geprüften vorausliegenden Fahrstrecke ein Bereich mit dem Verkehrszustand freier Verkehr vorliegt, dessen Streckenlänge kleiner ist als der vorgegebene Streckengrenzwert für den Bereich mit dem Verkehrszustand freier Verkehr, und
- direkt danach ein Bereich mit dem Verkehrszustand zähfließender und/oder stockender Verkehr vorliegt, dessen Streckenlänge größer ist als der vorgegebene kleine Streckengrenzwert für den Bereich mit dem Verkehrszustand zähfließender und/oder stockender Verkehr und kleiner ist als ein vorgegebener großer Streckengrenzwert für den Bereich mit dem Verkehrszustand zähfließender und/oder stockender Verkehr, und direkt danach ein Bereich mit dem Verkehrszustand gestauter Verkehr vorliegt, dessen Streckenlänge größer ist als der vorgegebene Streckengrenzwert für den Bereich mit dem Verkehrszustand gestauter Verkehr, oder
- direkt danach ein Bereich mit dem Verkehrszustand zähfließender und/oder stockender Verkehr vorliegt, dessen Streckenlänge kleiner ist als der vorgegebene kleine Streckengrenzwert für den Bereich mit dem Verkehrszustand zähfließender und/oder stockender Verkehr, direkt danach ein Bereich mit dem Verkehrszustand gestauter Verkehr vorliegt, dessen Streckenlänge kleiner ist als der vorgegebene Streckengrenzwert für den Bereich mit dem Verkehrszustand gestauter Verkehr, und direkt danach ein Bereich mit dem Verkehrszustand zähfließender und/oder stockender Verkehr vorliegt, dessen Streckenlänge kleiner ist als der vorgegebene kleine Streckengrenzwert für den Bereich mit dem Verkehrszustand zähfließender und/oder stockender Verkehr, oder
- direkt danach ein Bereich mit dem Verkehrszustand gestauter Verkehr vorliegt, dessen Streckenlänge kleiner ist als der vorgegebene Streckengrenzwert für den Bereich mit dem Verkehrszustand gestauter Verkehr, direkt danach ein Bereich mit dem Verkehrszustand zähfließender und/oder stockender Verkehr vorliegt, dessen Streckenlänge kleiner ist als der vorgegebene kleine Streckengrenzwert für den Bereich mit dem Verkehrszustand zähfließender und/oder stockender Verkehr, und direkt danach ein Bereich mit dem Verkehrszustand gestauter Verkehr vorliegt, dessen Streckenlänge kleiner ist als der vorgegebene Streckengrenzwert für den Bereich mit dem Verkehrszustand gestauter Verkehr. Diese vorausliegenden Verkehrssituationen erfordern zwar ein vorsichtiges Annähern, jedoch ist hier eine etwas höhere Geschwindigkeit möglich, so dass die Geschwindigkeit hier auf einen mittleren Wert reduziert wird, um eine Kollision mit anderen vorausfahrenden oder sich an einem vorausliegenden Stauende befindenden Fahrzeugen zu vermeiden.

Beispielsweise wird entschieden, dass die Setzgeschwindigkeit auf den hohen Geschwindigkeitswert, insbesondere 120 km/h, gesetzt werden soll, wenn zu Beginn der geprüften vorausliegenden Fahrstrecke ein Bereich mit dem Verkehrszustand freier Verkehr vorliegt, dessen Streckenlänge kleiner ist als der vorgegebene Streckengrenzwert für den Bereich mit dem Verkehrszustand freier Verkehr, und
- direkt danach ein Bereich mit dem Verkehrszustand zähfließender und/oder stockender Verkehr vorliegt, dessen Streckenlänge größer ist als der vorgegebene kleine Streckengrenzwert für den Bereich mit dem Verkehrszustand zähfließender und/oder stockender Verkehr, und insbesondere direkt danach ein Bereich mit dem Verkehrszustand freier Verkehr vorliegt, oder
- direkt danach ein Bereich mit dem Verkehrszustand gestauter Verkehr vorliegt, dessen Streckenlänge kleiner ist als der vorgegebene Streckengrenzwert für den Bereich mit dem Verkehrszustand gestauter Verkehr, direkt danach ein Bereich mit dem Verkehrszustand zähfließender und/oder stockender Verkehr vorliegt, dessen Streckenlänge größer ist als der vorgegebene kleine Streckengrenzwert für den Bereich mit dem Verkehrszustand zähfließender und/oder stockender Verkehr, und insbesondere direkt danach ein Bereich mit dem Verkehrszustand freier Verkehr vorliegt, oder
- direkt danach ein Bereich mit dem Verkehrszustand zähfließender und/oder stockender Verkehr vorliegt, dessen Streckenlänge größer ist als der vorgegebene kleine Streckengrenzwert für den Bereich mit dem Verkehrszustand zähfließender und/oder stockender Verkehr, direkt danach ein Bereich mit dem Verkehrszustand gestauter Verkehr vorliegt, dessen Streckenlänge kleiner ist als der vorgegebene Streckengrenzwert für den Bereich mit dem Verkehrszustand gestauter Verkehr, und insbesondere direkt danach ein Bereich mit dem Verkehrszustand freier Verkehr vorliegt. Diese vorausliegenden Verkehrssituationen erfordern zwar ein relativ vorsichtiges Annähern, jedoch ist hier noch eine relativ hohe Geschwindigkeit möglich, so dass die Geschwindigkeit hier auf einen höheren Wert reduziert wird, um eine Kollision mit anderen vorausfahrenden oder sich an einem vorausliegenden Stauende befindenden Fahrzeugen zu vermeiden.

Der vorgegebene Streckengrenzwert für den Bereich mit dem Verkehrszustand freier Verkehr beträgt beispielsweise 2 km. Dadurch wird ein zu frühes Festlegen und Setzen der Setzgeschwindigkeit auf den jeweiligen vorgegebenen Geschwindigkeitswert und somit ein zu frühzeitiges Abbremsen des Fahrzeugs vermieden. Ein solches sehr frühzeitiges Abbremsen des Fahrzeugs könnte beispielsweise zu einer mangelnden Akzeptanz durch einen Fahrzeugführer führen, da dieser nicht erkennen kann, warum das Fahrzeug abgebremst wird. Beispielsweise könnte dies auch zu einer unnötigen Verlängerung der Fahrzeit führen und beispielsweise auch zu einem unnötigen Abbremsen des Fahrzeugs, wenn sich die vorausliegende Verkehrssituation während der unnötig langsamen Annäherung des Fahrzeugs bereits wieder geändert hat. Diese Probleme werden auf die oben beschriebene Weise vermieden.

Der vorgegebene kleine Streckengrenzwert für den Bereich mit dem Verkehrszustand zähfließender und/oder stockender Verkehr beträgt beispielsweise 500 m. Dadurch kann zwischen relativ kurzen Bereichen mit zähfließendem und/oder stockendem Verkehr, welche sich beispielsweise während der weiteren Annäherung des Fahrzeugs bereits wieder aufgelöst haben können, und längeren derartigen Bereichen unterschieden werden und die Setzgeschwindigkeit entsprechend vorgegeben werden.

Der vorgegebene große Streckengrenzwert für den Bereich mit dem Verkehrszustand zähfließender und/oder stockender Verkehr beträgt beispielsweise 1 km. Dadurch kann die Setzgeschwindigkeit entsprechend angepasst werden, insbesondere an einen solchen relativ langen Bereich mit dem Verkehrszustand zähfließender und/oder stockender Verkehr, an welchen sich dann beispielsweis ein Bereich mit gestautem Verkehr anschließt.

Der vorgegebene Streckengrenzwert für den Bereich mit dem Verkehrszustand gestauter Verkehr beträgt beispielsweise 500 m. Dadurch kann zwischen relativ kurzen Bereichen mit gestautem Verkehr, welche sich beispielsweise während der weiteren Annäherung des Fahrzeugs bereits wieder aufgelöst haben können, und längeren derartigen Bereichen unterschieden werden und die Setzgeschwindigkeit entsprechend vorgegeben werden.

In einer möglichen Ausführungsform des Verfahrens kann vorgesehen sein, dass die Gesamtstreckenlänge und/oder die Geschwindigkeitswerte für die Setzgeschwindigkeit und/oder der Streckengrenzwert für den Bereich mit dem Verkehrszustand freier Verkehr und/oder der kleine Streckengrenzwert für den Bereich mit dem Verkehrszustand zähfließender und/oder stockender Verkehr und/oder der große Streckengrenzwert für den Bereich mit dem Verkehrszustand zähfließender und/oder stockender Verkehr und/oder der Streckengrenzwert für den Bereich mit dem Verkehrszustand gestauter Verkehr von einem Fahrzeugeigentümer und/oder Fahrzeugbesitzer und/oder Fahrzeugnutzer und/oder von einer fahrzeugexternen technischen Einrichtung, insbesondere von einem fahrzeugexternen Server, insbesondere von einer fahrzeugexternen technischen Einrichtung eines Herstellers des Fahrzeugs, vorgegeben werden können. Bei der Vorgabe durch die fahrzeugexterne technische Einrichtung erfolgt dies insbesondere kabellos, insbesondere über eine Funkverbindung, insbesondere über eine Internetverbindung. Dadurch wird es beispielsweise ermöglicht, einen oder mehrere der oben genannten Parameter an individuelle Bedürfnisse anzupassen. Alternativ oder zusätzlich kann dadurch beispielsweise vorgesehen sein, dass die Geschwindigkeitswerte für die Setzgeschwindigkeit, auf die insbesondere jeweils abgebremst werden sollte, zeitlich-räumlich über eine solche fahrzeugexterne technische Einrichtung, beispielsweise über den fahrzeugexternen Server, insbesondere über einen cloudbasierten Dienst, übertragen werden. Dadurch können beispielsweise spezifische Ländereigenschaften, insbesondere spezifische Vorgaben eines jeweiligen Landes, in welchem sich das Fahrzeug aktuell befindet, zum Beispiel Geschwindigkeitsbegrenzungen, und/oder beispielsweise streckenspezifische Geschwindigkeitsbegrenzungen berücksichtigt werden. Alternativ oder zusätzlich können über eine solche fahrzeugexterne technische Einrichtung, beispielsweise über den fahrzeugexternen Server, insbesondere über den cloudbasierten Dienst, beispielsweise auch Testergebnisse aus Flottendaten und/oder Rückmeldungen anderer Fahrzeugnutzer in die Vorgabe der Geschwindigkeitswerte für die Setzgeschwindigkeit einfließen, d. h. hierzu berücksichtigt werden. Dadurch können beispielsweise mehr Geschwindigkeitswerte vorgegeben werden, insbesondere zusätzliche Geschwindigkeitswerte zwischen dem niedrigen und hohen Geschwindigkeitswert, um dadurch eine differenziertere Vorgabe der jeweiligen Setzgeschwindigkeit zu ermöglichen. Beispielsweise sind dadurch Geschwindigkeitswerte für die Setzgeschwindigkeit in 5 km/h-Intervallen möglich.

In einer möglichen Ausführungsform des Verfahrens kann beispielsweise vorgesehen sein, dass zusätzlich in Abhängigkeit von Sensordaten einer Umfelderfassungssensorik des Fahrzeugs entschieden wird, ob die Setzgeschwindigkeit vom Assistenzsystem festgelegt werden soll und auf welchen von mehreren vorgegebenen Geschwindigkeitswerten die Setzgeschwindigkeit gesetzt werden soll. Dadurch kann ein fehlerhaftes Setzen der Setzgeschwindigkeit und somit beispielsweise ein unnötiges Abbremsen des Fahrzeugs bei geringem Verkehr in der Umgebung des Fahrzeugs oder ein zu geringes Abbremsen des Fahrzeugs bei einem bereits in der Umgebung des Fahrzeugs vorliegenden hohen Verkehrsaufkommen vermieden werden. Die Festlegung der Setzgeschwindigkeit des Assistenzsystems wird dann beispielsweise mit einer aus Sensoren, zum Beispiel Kamera und Radar, der Umfelderfassungssensorik des Fahrzeugs bekannten Objektliste in der Umgebung des Fahrzeugs abgeglichen zur Vermeidung falscher und zu starker Bremseingriffe, beispielsweise wenn der Verkehr so schwach ist, das keine anderen Fahrzeuge in der Umgebung vorhanden sind, oder wenn im Gegensatz dazu beispielsweise anhand mehrerer überholender Objekte festgestellt wird, dass bereits ein dichter Verkehr in der Fahrzeugumgebung vorliegt.

Zur Durchführung weist das Fahrzeug vorteilhafterweise ein Navigationssystem mit dynamischer Routenberechnung und Streckenvorausschau auf. Die Streckenvorausschau ist dabei beispielsweise eine verkehrszustandsabhängige Streckenvorausschau, beispielsweise gemäß der DE 10 2009 059 128 A1. Vorteilhafterweise weist das Fahrzeug eine Kommunikationseinrichtung zu der fahrzeugexternen technischen Einrichtung auf, insbesondere zu einem Internet-Backend. Das Fahrzeug kann vorteilhafterweise Steuerungsvorschläge, d. h. Vorgaben oder Anweisungen, insbesondere Steuerungsanweisungen, für das Assistenzsystem, beispielsweise für das Bremsassistenzsystem und/oder die Abstands- und/oder Geschwindigkeitsregelanlage, verarbeiten, insbesondere die mittels des Verfahrens getroffene Entscheidung bezüglich der Setzgeschwindigkeit.

Zusätzlich zu den oben beschriebenen Kriterien zur Entscheidung, ob die Setzgeschwindigkeit vom Assistenzsystem festgelegt werden soll und auf welchen von mehreren vorgegebenen Geschwindigkeitswerten die Setzgeschwindigkeit gesetzt werden soll, kann beispielsweise vorgesehen sein, dass auch eine aktive Stauendewarnung ("Gefährliches Stauende voraus."), insbesondere mit einer akustischen Warnungsausgabe, berücksichtigt wird. Erfolgt eine solche Stauendewarnung, kann beispielsweise vorgesehen sein, dass dann entschieden wird, dass die Setzgeschwindigkeit vom Assistenzsystem festgelegt werden soll und dass sie auf einen vorgegebenen sehr niedrigen Geschwindigkeitswert von beispielsweise 60 km/h gesetzt werden soll. Beispielsweise kann vorgesehen sein, dass dieser sehr niedrige Geschwindigkeitswert parametrierbar ist, d. h. beispielsweise vom Fahrzeugeigentümer und/oder Fahrzeugbesitzer und/oder Fahrzeugnutzer und/oder von der fahrzeugexternen technischen Einrichtung, insbesondere vom fahrzeugexternen Server, insbesondere von der fahrzeugexternen technischen Einrichtung des Herstellers des Fahrzeugs, vorgegeben werden kann.

Beispielsweise kann eine Position einer ermittelten gefährlichen Staufront in eine Vorausschau-Verkehrszustandsbotschaft nach DE 10 2009 059 128 A1 integriert werden.

Alternativ oder zusätzlich zur oben beschriebenen Entscheidung, ob die Setzgeschwindigkeit vom Assistenzsystem festgelegt werden soll und auf welchen von mehreren vorgegebenen Geschwindigkeitswerten die Setzgeschwindigkeit gesetzt werden soll, und insbesondere Übermittlung dieser Entscheidung an das Assistenzsystem kann beispielsweise an Stelle der Entscheidung zum Setzen der Setzgeschwindigkeit oder zusätzlich zu dieser eine aktive Bremsempfehlung, beispielsweise durch eine optische, insbesondere grafische, und/oder akustische und/oder haptische Meldung, ausgegeben werden. Dies ist beispielsweise vorteilhaft für Fahrzeuge, die kein entsprechendes Assistenzsystem, insbesondere kein Bremsassistenzsystem und/oder keine Abstands- und/oder Geschwindigkeitsregelanlage aufweisen.

Das oben beschriebene Verfahren kann beispielsweise für einen manuellen, d. h. vollständig durch einen Fahrzeugführer durchgeführten Fahrbetrieb, für einen durch ein oder mehrere Assistenzsysteme unterstützten Fahrbetrieb, für einen teilautomatisierten, für einen vollautomatisierten und/oder für einen autonomen Fahrbetrieb vorgesehen sein, d. h. vorteilhafterweise für alle Varianten des Fahrbetriebs.

Beispielsweise ist vorgesehen, dass die mittels des Verfahrens realisierte oder realisierbare Funktion des vorausschauenden Abbremsens, d. h. das automatische Setzen einer Setzgeschwindigkeit, welche beispielsweise von einer durch den Fahrzeugnutzer und/oder Fahrzeugführer vorgegebenen Setzgeschwindigkeit abweicht, dem Fahrzeugnutzer und/oder Fahrzeugführer angezeigt wird, zum Beispiel in einem Kombiinstrument des Fahrzeugs. Dadurch ist der Fahrzeugnutzer und/oder Fahrzeugführer informiert und nicht irritiert über beispielsweise eine Bremsung des Fahrzeugs, obwohl ein größeres Verkehrsaufkommen für den Fahrzeugnutzer und/oder Fahrzeugführer noch nicht in Sicht ist.

Ausführungsbeispiele der Erfindung werden im Folgenden anhand von Zeichnungen näher erläutert.

Dabei zeigen:
- Fig. 1: schematisch verschiedene Kombinationen von Verkehrszuständen auf einer einem Fahrzeug vorausliegenden Fahrstrecke, für welche jeweils kein Eingriff für die Festlegung einer Setzgeschwindigkeit vorgesehen ist,
- Fig. 2: schematisch verschiedene Kombinationen von Verkehrszuständen auf einer einem Fahrzeug vorausliegenden Fahrstrecke, für welche jeweils eine Setzgeschwindigkeit mit einem niedrigen vorgegebenen Geschwindigkeitswert vorgesehen ist,
- Fig. 3: schematisch verschiedene Kombinationen von Verkehrszuständen auf einer einem Fahrzeug vorausliegenden Fahrstrecke, für welche jeweils eine Setzgeschwindigkeit mit einem mittleren vorgegebenen Geschwindigkeitswert vorgesehen ist, und
- Fig. 4: schematisch verschiedene Kombinationen von Verkehrszuständen auf einer einem Fahrzeug vorausliegenden Fahrstrecke, für welche jeweils eine Setzgeschwindigkeit mit einem hohen vorgegebenen Geschwindigkeitswert vorgesehen ist.

Einander entsprechende Teile sind in allen Figuren mit den gleichen Bezugszeichen versehen.

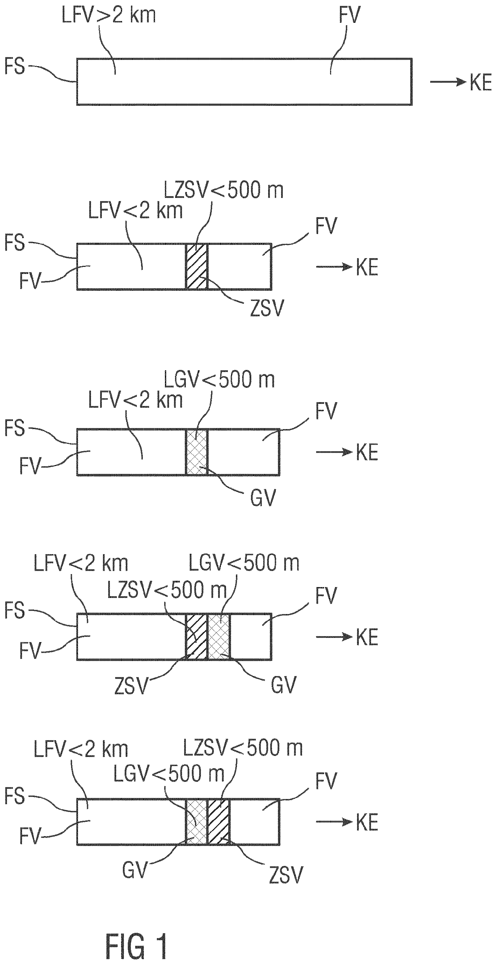

Anhand der Figuren 1 bis 4 wird im Folgenden ein Verfahren zur Bestimmung einer Setzgeschwindigkeit VS eines Assistenzsystems zur Regelung einer Längsbewegung eines Fahrzeugs erläutert. Die Setzgeschwindigkeit VS ist hierbei eine vorgebbare Sollgeschwindigkeit, auf die die Geschwindigkeit des Fahrzeugs geregelt wird, sofern das Fahrzeug durch die Regelung einem vorausfahrenden Fahrzeug nicht zu nahe auffährt. Das Fahrzeug fährt dem vorausfahrenden Fahrzeug insbesondere dann nicht zu nahe auf, wenn ein vorgebbarer Abstand zum vorausfahrenden Fahrzeug nicht unterschritten wird. In diesem Verfahren wird eine dem Fahrzeug vorausliegende Fahrstrecke FS mit einer vorgegebenen Gesamtstreckenlänge dahingehend geprüft, ob auf dieser Gesamtstreckenlänge Bereiche mit einem Verkehrszustand freier Verkehr FV, Bereiche mit einem Verkehrszustand zähfließender und/oder stockender Verkehr ZSV und/oder Bereiche mit einem Verkehrszustand gestauter Verkehr GV vorliegen, und es wird eine Streckenlänge LFV, LGV, LZSV des jeweiligen Bereichs ermittelt. In Abhängigkeit hiervon wird entschieden, ob die Setzgeschwindigkeit VS vom Assistenzsystem festgelegt werden soll, und wenn ja, auf welchen von mehreren vorgegebenen Geschwindigkeitswerten VSN, VSM, VSH die Setzgeschwindigkeit VS gesetzt werden soll.

Die Figuren 1 bis 4 zeigen hierzu jeweils die dem Fahrzeug vorausliegende Fahrstrecke FS mit der vorgegebenen Gesamtstreckenlänge, wobei auf den dargestellten Fahrstrecken FS verschiedene Kombinationen der oben genannten Bereiche mit dem jeweiligen Verkehrszustand FV, ZSV, GV vorliegen.

Dabei zeigt Figur 1 Kombinationen der oben genannten Bereiche mit dem jeweiligen Verkehrszustand FV, ZSV, GV, für welche jeweils kein Eingriff KE für die Festlegung der Setzgeschwindigkeit VS vorgesehen ist. D. h. hier wird jeweils entschieden, dass die Setzgeschwindigkeit VS nicht vom Assistenzsystem festgelegt werden soll.

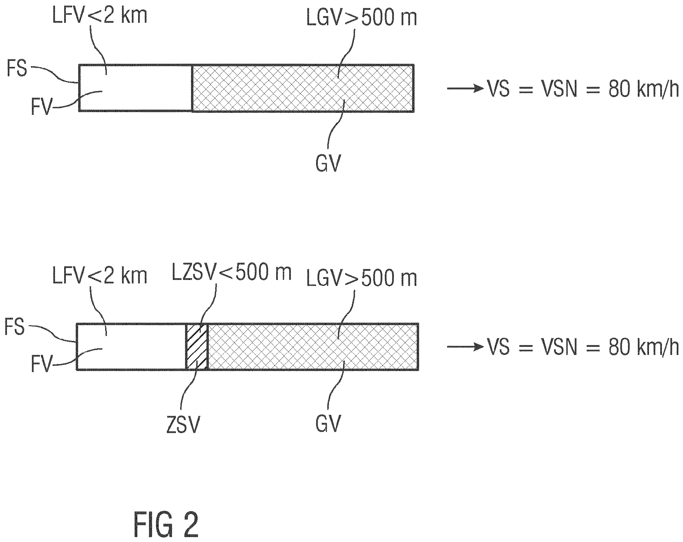

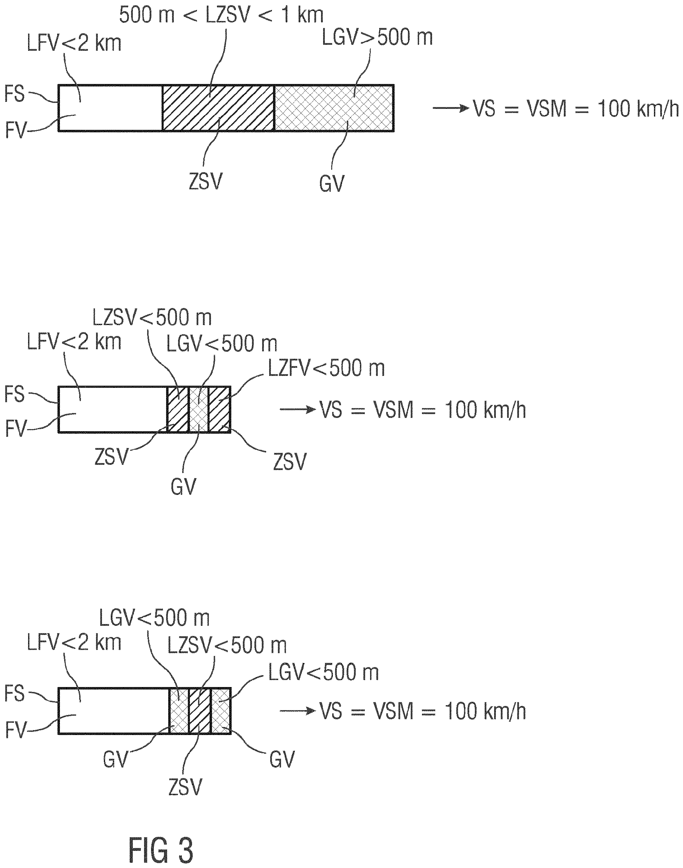

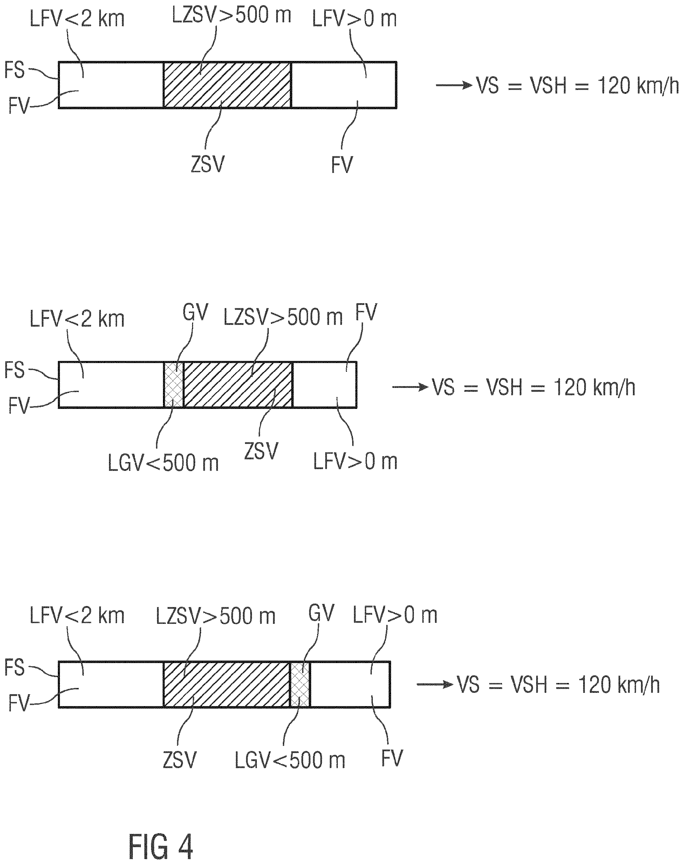

Die Figuren 2 bis 4 zeigen jeweils Kombinationen der oben genannten Bereiche mit dem jeweiligen Verkehrszustand FV, ZSV, GV, für welche jeweils eine Setzgeschwindigkeit VS vorgesehen ist. D. h. hier wird jeweils entschieden, dass die Setzgeschwindigkeit VS vom Assistenzsystem festgelegt werden soll, und es wird zudem entschieden, auf welchen von mehreren vorgegebenen Geschwindigkeitswerten VSN, VSM, VSH die Setzgeschwindigkeit VS gesetzt werden soll. Dabei wird bei den in Figur 2 gezeigten jeweiligen Kombinationen der oben genannten Bereiche mit dem jeweiligen Verkehrszustand FV, ZSV, GV entschieden, dass die Setzgeschwindigkeit VS auf einen niedrigen vorgegebenen Geschwindigkeitswert VSN von in diesem Beispiel 80 km/h gesetzt werden soll, bei den in Figur 3 gezeigten jeweiligen Kombinationen der oben genannten Bereiche mit dem jeweiligen Verkehrszustand FV, ZSV, GV wird entschieden, dass die Setzgeschwindigkeit VS auf einen mittleren vorgegebenen Geschwindigkeitswert VSM von in diesem Beispiel 100 km/h gesetzt werden soll, und bei den in Figur 4 gezeigten jeweiligen Kombinationen der oben genannten Bereiche mit dem jeweiligen Verkehrszustand FV, ZSV, GV wird entschieden, dass die Setzgeschwindigkeit VS auf einen hohen vorgegebenen Geschwindigkeitswert VSH von in diesem Beispiel 120 km/h gesetzt werden soll.

Im dargestellten Beispiel gemäß den Figuren 2 bis 4 wird entschieden, dass die Setzgeschwindigkeit VS vom Assistenzsystem festgelegt werden soll, wenn zu Beginn der geprüften vorausliegenden Fahrstrecke FS ein Bereich mit dem Verkehrszustand freier Verkehr FV vorliegt, dessen Streckenlänge LFV kleiner ist als ein vorgegebener Streckengrenzwert von in diesem Beispiel 2 km für den Bereich mit dem Verkehrszustand freier Verkehr FV, und
- direkt danach ein Bereich mit dem Verkehrszustand gestauter Verkehr GV vorliegt, dessen Streckenlänge LGV größer ist als ein vorgegebener Streckengrenzwert von in diesem Beispiel 500 m für den Bereich mit dem Verkehrszustand gestauter Verkehr GV, wie in Figur 2 oben gezeigt, oder
- direkt danach ein Bereich mit dem Verkehrszustand zähfließender und/oder stockender Verkehr ZSV vorliegt, dessen Streckenlänge LZSV größer ist als ein vorgegebener kleiner Streckengrenzwert von in diesem Beispiel 500 m für den Bereich mit dem Verkehrszustand zähfließender und/oder stockender Verkehr ZSV, wie in Figur 3 oben und in Figur 4 oben und unten gezeigt, oder
- direkt danach ein Bereich mit dem Verkehrszustand zähfließender und/oder stockender Verkehr ZSV vorliegt, dessen Streckenlänge LZSV kleiner ist als der vorgegebene kleine Streckengrenzwert von in diesem Beispiel 500 m für den Bereich mit dem Verkehrszustand zähfließender und/oder stockender Verkehr ZSV, und direkt danach ein Bereich mit dem Verkehrszustand gestauter Verkehr GV vorliegt, dessen Streckenlänge LGV größer ist als der vorgegebene Streckengrenzwert von in diesem Beispiel 500 m für den Bereich mit dem Verkehrszustand gestauter Verkehr GV, wie in Figur 2 unten gezeigt, oder
- direkt danach ein Bereich mit dem Verkehrszustand zähfließender und/oder stockender Verkehr ZSV vorliegt, dessen Streckenlänge LZSV kleiner ist als der vorgegebene kleine Streckengrenzwert von in diesem Beispiel 500 m für den Bereich mit dem Verkehrszustand zähfließender und/oder stockender Verkehr ZSV, direkt danach ein Bereich mit dem Verkehrszustand gestauter Verkehr GV vorliegt, dessen Streckenlänge LGV kleiner ist als der vorgegebene Streckengrenzwert von in diesem Beispiel 500 m für den Bereich mit dem Verkehrszustand gestauter Verkehr GV, und direkt danach ein Bereich mit dem Verkehrszustand zähfließender und/oder stockender Verkehr ZSV vorliegt, dessen Streckenlänge LZSV kleiner ist als der vorgegebene kleine Streckengrenzwert von in diesem Beispiel 500 m für den Bereich mit dem Verkehrszustand zähfließender und/oder stockender Verkehr ZSV, wie in Figur 3 Mitte gezeigt, oder
- direkt danach ein Bereich mit dem Verkehrszustand gestauter Verkehr GV vorliegt, dessen Streckenlänge LGV kleiner ist als der vorgegebene Streckengrenzwert von in diesem Beispiel 500 m für den Bereich mit dem Verkehrszustand gestauter Verkehr GV, direkt danach ein Bereich mit dem Verkehrszustand zähfließender und/oder stockender Verkehr ZSV vorliegt, dessen Streckenlänge LZSV kleiner ist als der vorgegebene kleine Streckengrenzwert von in diesem Beispiel 500 m für den Bereich mit dem Verkehrszustand zähfließender und/oder stockender Verkehr ZSV, und direkt danach ein Bereich mit dem Verkehrszustand gestauter Verkehr GV vorliegt, dessen Streckenlänge LGV kleiner ist als der vorgegebene Streckengrenzwert von in diesem Beispiel 500 m für den Bereich mit dem Verkehrszustand gestauter Verkehr GV, wie in Figur 3 unten gezeigt, oder
- direkt danach ein Bereich mit dem Verkehrszustand gestauter Verkehr GV vorliegt, dessen Streckenlänge LGV kleiner ist als der vorgegebene Streckengrenzwert von in diesem Beispiel 500 m für den Bereich mit dem Verkehrszustand gestauter Verkehr GV, und direkt danach ein Bereich mit dem Verkehrszustand zähfließender und/oder stockender Verkehr ZSV vorliegt, dessen Streckenlänge LZSV größer ist als der vorgegebene kleine Streckengrenzwert von in diesem Beispiel 500 m für den Bereich mit dem Verkehrszustand zähfließender und/oder stockender Verkehr ZSV, wie in Figur 4 Mitte gezeigt.

Vorteilhafterweise wird in allen anderen Fällen entschieden, dass die Setzgeschwindigkeit VS nicht vom Assistenzsystem festgelegt werden soll, d. h. dass kein Eingriff KE für die Festlegung der Setzgeschwindigkeit VS erfolgen soll. Dies gilt insbesondere für die in Figur 1 beispielhaft dargestellten Kombinationen der genannten Bereiche mit dem jeweiligen Verkehrszustand FV, GV, ZSV.

In Figur 1 oben liegt nur ein Bereich mit dem Verkehrszustand freier Verkehr FV vor, dessen Streckenlänge LFV größer ist als der vorgegebene Streckengrenzwert von in diesem Beispiel 2 km für den Bereich mit dem Verkehrszustand freier Verkehr FV. Hier wird entschieden, dass die Setzgeschwindigkeit VS nicht vom Assistenzsystem festgelegt werden soll.

In Figur 1, zweites Beispiel von oben, liegt zu Beginn der geprüften vorausliegenden Fahrstrecke FS ein Bereich mit dem Verkehrszustand freier Verkehr FV vor, dessen Streckenlänge LFV kleiner ist als der vorgegebene Streckengrenzwert von in diesem Beispiel 2 km für den Bereich mit dem Verkehrszustand freier Verkehr FV, direkt danach liegt ein Bereich mit dem Verkehrszustand zähfließender und/oder stockender Verkehr ZSV vor, dessen Streckenlänge LZSV kleiner ist als der vorgegebene kleine Streckengrenzwert von in diesem Beispiel 500 m für den Bereich mit dem Verkehrszustand zähfließender und/oder stockender Verkehr ZSV, und direkt danach liegt ein weiterer Bereich mit dem Verkehrszustand freier Verkehr FV vor. Hier wird entschieden, dass die Setzgeschwindigkeit VS nicht vom Assistenzsystem festgelegt werden soll.

In Figur 1 Mitte liegt zu Beginn der geprüften vorausliegenden Fahrstrecke FS ein Bereich mit dem Verkehrszustand freier Verkehr FV vor, dessen Streckenlänge LFV kleiner ist als der vorgegebene Streckengrenzwert von in diesem Beispiel 2 km für den Bereich mit dem Verkehrszustand freier Verkehr FV, direkt danach liegt ein Bereich mit dem Verkehrszustand gestauter Verkehr GV vor, dessen Streckenlänge LGV kleiner ist als der vorgegebene Streckengrenzwert von in diesem Beispiel 500 m für den Bereich mit dem Verkehrszustand gestauter Verkehr GV, und direkt danach liegt ein weiterer Bereich mit dem Verkehrszustand freier Verkehr FV vor. Hier wird entschieden, dass die Setzgeschwindigkeit VS nicht vom Assistenzsystem festgelegt werden soll.

In Figur 1, zweites Beispiel von unten, liegt zu Beginn der geprüften vorausliegenden Fahrstrecke FS ein Bereich mit dem Verkehrszustand freier Verkehr FV vor, dessen Streckenlänge LFV kleiner ist als der vorgegebene Streckengrenzwert von in diesem Beispiel 2 km für den Bereich mit dem Verkehrszustand freier Verkehr FV, direkt danach liegt ein Bereich mit dem Verkehrszustand zähfließender und/oder stockender Verkehr ZSV vor, dessen Streckenlänge LZSV kleiner ist als der vorgegebene kleine Streckengrenzwert von in diesem Beispiel 500 m für den Bereich mit dem Verkehrszustand zähfließender und/oder stockender Verkehr ZSV, direkt danach liegt ein Bereich mit dem Verkehrszustand gestauter Verkehr GV vor, dessen Streckenlänge LGV kleiner ist als der vorgegebene Streckengrenzwert von in diesem Beispiel 500 m für den Bereich mit dem Verkehrszustand gestauter Verkehr GV, und direkt danach liegt ein weiterer Bereich mit dem Verkehrszustand freier Verkehr FV vor. Hier wird entschieden, dass die Setzgeschwindigkeit VS nicht vom Assistenzsystem festgelegt werden soll.

In Figur 1 unten liegt zu Beginn der geprüften vorausliegenden Fahrstrecke FS ein Bereich mit dem Verkehrszustand freier Verkehr FV vor, dessen Streckenlänge LFV kleiner ist als der vorgegebene Streckengrenzwert von in diesem Beispiel 2 km für den Bereich mit dem Verkehrszustand freier Verkehr FV, direkt danach liegt ein Bereich mit dem Verkehrszustand gestauter Verkehr GV vor, dessen Streckenlänge LGV kleiner ist als der vorgegebene Streckengrenzwert von in diesem Beispiel 500 m für den Bereich mit dem Verkehrszustand gestauter Verkehr GV, direkt danach liegt ein Bereich mit dem Verkehrszustand zähfließender und/oder stockender Verkehr ZSV vor, dessen Streckenlänge LZSV kleiner ist als der vorgegebene kleine Streckengrenzwert von in diesem Beispiel 500 m für den Bereich mit dem Verkehrszustand zähfließender und/oder stockender Verkehr ZSV, und direkt danach liegt ein weiterer Bereich mit dem Verkehrszustand freier Verkehr FV vor. Hier wird entschieden, dass die Setzgeschwindigkeit VS nicht vom Assistenzsystem festgelegt werden soll.

Wie oben bereits erwähnt, zeigen die Figuren 2 bis 4 jeweils Kombinationen der oben genannten Bereiche mit dem jeweiligen Verkehrszustand FV, GV, ZSV, für welche jeweils eine Setzgeschwindigkeit VS vorgesehen ist. D. h. hier wird jeweils entschieden, dass die Setzgeschwindigkeit VS vom Assistenzsystem festgelegt werden soll, und es wird zudem entschieden, auf welchen von mehreren vorgegebenen Geschwindigkeitswerten VSN, VSM, VSH die Setzgeschwindigkeit VS gesetzt werden soll.

In Figur 2 oben liegt zu Beginn der geprüften vorausliegenden Fahrstrecke FS ein Bereich mit dem Verkehrszustand freier Verkehr FV vor, dessen Streckenlänge LFV kleiner ist als der vorgegebene Streckengrenzwert von in diesem Beispiel 2 km für den Bereich mit dem Verkehrszustand freier Verkehr FV, und direkt danach liegt ein Bereich mit dem Verkehrszustand gestauter Verkehr GV vor, dessen Streckenlänge LGV größer ist als der vorgegebene Streckengrenzwert von in diesem Beispiel 500 m für den Bereich mit dem Verkehrszustand gestauter Verkehr GV. Hier wird entschieden, dass die Setzgeschwindigkeit VS auf den niedrigen vorgegebenen Geschwindigkeitswert VSN von in diesem Beispiel 80 km/h gesetzt werden soll.

In Figur 2 unten liegt zu Beginn der geprüften vorausliegenden Fahrstrecke FS ein Bereich mit dem Verkehrszustand freier Verkehr FV vor, dessen Streckenlänge LFV kleiner ist als der vorgegebene Streckengrenzwert von in diesem Beispiel 2 km für den Bereich mit dem Verkehrszustand freier Verkehr FV, direkt danach liegt ein Bereich mit dem Verkehrszustand zähfließender und/oder stockender Verkehr ZSV vor, dessen Streckenlänge LZSV kleiner ist als der vorgegebene kleine Streckengrenzwert von in diesem Beispiel 500 m für den Bereich mit dem Verkehrszustand zähfließender und/oder stockender Verkehr ZSV, und direkt danach liegt ein Bereich mit dem Verkehrszustand gestauter Verkehr GV vor, dessen Streckenlänge LGV größer ist als der vorgegebene Streckengrenzwert von in diesem Beispiel 500 m für den Bereich mit dem Verkehrszustand gestauter Verkehr GV. Hier wird entschieden, dass die Setzgeschwindigkeit VS auf den niedrigen vorgegebenen Geschwindigkeitswert VSN von in diesem Beispiel 80 km/h gesetzt werden soll.

In Figur 3 oben liegt zu Beginn der geprüften vorausliegenden Fahrstrecke FS ein Bereich mit dem Verkehrszustand freier Verkehr FV vor, dessen Streckenlänge LFV kleiner ist als der vorgegebene Streckengrenzwert von in diesem Beispiel 2 km für den Bereich mit dem Verkehrszustand freier Verkehr FV, direkt danach liegt ein Bereich mit dem Verkehrszustand zähfließender und/oder stockender Verkehr ZSV vor, dessen Streckenlänge LZSV größer ist als der vorgegebene kleine Streckengrenzwert von in diesem Beispiel 500 m für den Bereich mit dem Verkehrszustand zähfließender und/oder stockender Verkehr ZSV und kleiner ist als ein vorgegebener großer Streckengrenzwert von in diesem Beispiel 1 km für den Bereich mit dem Verkehrszustand zähfließender und/oder stockender Verkehr ZSV, und direkt danach liegt ein Bereich mit dem Verkehrszustand gestauter Verkehr GV vor, dessen Streckenlänge LGV größer ist als der vorgegebene Streckengrenzwert von in diesem Beispiel 500 m für den Bereich mit dem Verkehrszustand gestauter Verkehr GV. Hier wird entschieden, dass die Setzgeschwindigkeit VS auf den mittleren vorgegebenen Geschwindigkeitswert VSM von in diesem Beispiel 100 km/h gesetzt werden soll.

In Figur 3 Mitte liegt zu Beginn der geprüften vorausliegenden Fahrstrecke FS ein Bereich mit dem Verkehrszustand freier Verkehr FV vor, dessen Streckenlänge LFV kleiner ist als der vorgegebene Streckengrenzwert von in diesem Beispiel 2 km für den Bereich mit dem Verkehrszustand freier Verkehr FV, direkt danach liegt ein Bereich mit dem Verkehrszustand zähfließender und/oder stockender Verkehr ZSV vor, dessen Streckenlänge LZSV kleiner ist als der vorgegebene kleine Streckengrenzwert von in diesem Beispiel 500 m für den Bereich mit dem Verkehrszustand zähfließender und/oder stockender Verkehr ZSV, direkt danach liegt ein Bereich mit dem Verkehrszustand gestauter Verkehr GV vor, dessen Streckenlänge LGV kleiner ist als der vorgegebene Streckengrenzwert von in diesem Beispiel 500 m für den Bereich mit dem Verkehrszustand gestauter Verkehr GV, und direkt danach liegt ein weiterer Bereich mit dem Verkehrszustand zähfließender und/oder stockender Verkehr ZSV vor, dessen Streckenlänge LZSV kleiner ist als der vorgegebene kleine Streckengrenzwert von in diesem Beispiel 500 m für den Bereich mit dem Verkehrszustand zähfließender und/oder stockender Verkehr ZSV. Hier wird entschieden, dass die Setzgeschwindigkeit VS auf den mittleren vorgegebenen Geschwindigkeitswert VSM von in diesem Beispiel 100 km/h gesetzt werden soll.

In Figur 3 unten liegt zu Beginn der geprüften vorausliegenden Fahrstrecke FS ein Bereich mit dem Verkehrszustand freier Verkehr FV vor, dessen Streckenlänge LFV kleiner ist als der vorgegebene Streckengrenzwert von in diesem Beispiel 2 km für den Bereich mit dem Verkehrszustand freier Verkehr FV, direkt danach liegt ein Bereich mit dem Verkehrszustand gestauter Verkehr GV vor, dessen Streckenlänge LGV kleiner ist als der vorgegebene Streckengrenzwert von in diesem Beispiel 500 m für den Bereich mit dem Verkehrszustand gestauter Verkehr GV, direkt danach liegt ein Bereich mit dem Verkehrszustand zähfließender und/oder stockender Verkehr ZSV vor, dessen Streckenlänge LZSV kleiner ist als der vorgegebene kleine Streckengrenzwert von in diesem Beispiel 500 m für den Bereich mit dem Verkehrszustand zähfließender und/oder stockender Verkehr ZSV, und direkt danach liegt ein weiterer Bereich mit dem Verkehrszustand gestauter Verkehr GV vor, dessen Streckenlänge LGV kleiner ist als der vorgegebene Streckengrenzwert von in diesem Beispiel 500 m für den Bereich mit dem Verkehrszustand gestauter Verkehr GV. Hier wird entschieden, dass die Setzgeschwindigkeit VS auf den mittleren vorgegebenen Geschwindigkeitswert VSM von in diesem Beispiel 100 km/h gesetzt werden soll.

In Figur 4 oben liegt zu Beginn der geprüften vorausliegenden Fahrstrecke FS ein Bereich mit dem Verkehrszustand freier Verkehr FV vor, dessen Streckenlänge LFV kleiner ist als der vorgegebene Streckengrenzwert von in diesem Beispiel 2 km für den Bereich mit dem Verkehrszustand freier Verkehr FV, direkt danach liegt ein Bereich mit dem Verkehrszustand zähfließender und/oder stockender Verkehr ZSV vor, dessen Streckenlänge LZSV größer ist als der vorgegebene kleine Streckengrenzwert von in diesem Beispiel 500 m für den Bereich mit dem Verkehrszustand zähfließender und/oder stockender Verkehr ZSV, und im dargestellten Beispiel liegt direkt danach ein weiterer Bereich mit dem Verkehrszustand freier Verkehr FV vor, dessen Streckenlänge LFV größer als 0 m ist. Hier wird entschieden, dass die Setzgeschwindigkeit VS auf den hohen vorgegebenen Geschwindigkeitswert VSH von in diesem Beispiel 120 km/h gesetzt werden soll.

In Figur 4 Mitte liegt zu Beginn der geprüften vorausliegenden Fahrstrecke FS ein Bereich mit dem Verkehrszustand freier Verkehr FV vor, dessen Streckenlänge LFV kleiner ist als der vorgegebene Streckengrenzwert von in diesem Beispiel 2 km für den Bereich mit dem Verkehrszustand freier Verkehr FV, direkt danach liegt ein Bereich mit dem Verkehrszustand gestauter Verkehr GV vor, dessen Streckenlänge LGV kleiner ist als der vorgegebene Streckengrenzwert von in diesem Beispiel 500 m für den Bereich mit dem Verkehrszustand gestauter Verkehr GV, direkt danach liegt ein Bereich mit dem Verkehrszustand zähfließender und/oder stockender Verkehr ZSV vor, dessen Streckenlänge LZSV größer ist als der vorgegebene kleine Streckengrenzwert von in diesem Beispiel 500 m für den Bereich mit dem Verkehrszustand zähfließender und/oder stockender Verkehr ZSV, und im dargestellten Beispiel liegt direkt danach ein weiterer Bereich mit dem Verkehrszustand freier Verkehr FV vor, dessen Streckenlänge LFV größer als 0 m ist. Hier wird entschieden, dass die Setzgeschwindigkeit VS auf den hohen vorgegebenen Geschwindigkeitswert VSH von in diesem Beispiel 120 km/h gesetzt werden soll.

In Figur 4 unten liegt zu Beginn der geprüften vorausliegenden Fahrstrecke FS ein Bereich mit dem Verkehrszustand freier Verkehr FV vor, dessen Streckenlänge LFV kleiner ist als der vorgegebene Streckengrenzwert von in diesem Beispiel 2 km für den Bereich mit dem Verkehrszustand freier Verkehr FV, direkt danach liegt ein Bereich mit dem Verkehrszustand zähfließender und/oder stockender Verkehr ZSV vor, dessen Streckenlänge LZSV größer ist als der vorgegebene kleine Streckengrenzwert von in diesem Beispiel 500 m für den Bereich mit dem Verkehrszustand zähfließender und/oder stockender Verkehr ZSV, direkt danach liegt ein Bereich mit dem Verkehrszustand gestauter Verkehr GV vor, dessen Streckenlänge LGV kleiner ist als der vorgegebene Streckengrenzwert von in diesem Beispiel 500 m für den Bereich mit dem Verkehrszustand gestauter Verkehr GV, und im dargestellten Beispiel liegt direkt danach ein Bereich mit dem Verkehrszustand freier Verkehr FV vor, dessen Streckenlänge LFV größer als 0 m ist. Hier wird entschieden, dass die Setzgeschwindigkeit VS auf den hohen vorgegebenen Geschwindigkeitswert VSH von in diesem Beispiel 120 km/h gesetzt werden soll.

Wie oben bereits erwähnt, beträgt im hier beschriebenen Beispiel der vorgegebene Streckengrenzwert für den Bereich mit dem Verkehrszustand freier Verkehr FV 2 km, der vorgegebene kleine Streckengrenzwert für den Bereich mit dem Verkehrszustand zähfließender und/oder stockender Verkehr ZSV beträgt 500 m, der vorgegebene große Streckengrenzwert für den Bereich mit dem Verkehrszustand zähfließender und/oder stockender Verkehr ZSV beträgt 1 km und der vorgegebene Streckengrenzwert für den Bereich mit dem Verkehrszustand gestauter Verkehr GV beträgt 500 m. In anderen Ausführungsbeispielen sind für den jeweiligen Streckengrenzwert auch andere Werte möglich.

Wie oben bereits erwähnt, sind im hier beschriebenen Beispiel als Geschwindigkeitswerte VSN, VSM, VSH für die Setzgeschwindigkeit VS ein niedriger Geschwindigkeitswert VSN, ein mittlerer Geschwindigkeitswert VSM und ein hoher Geschwindigkeitswert VSH vorgesehen. In anderen Ausführungsbeispielen können beispielsweise noch weitere Geschwindigkeitswerte zwischen dem niedrigen Geschwindigkeitswert VSN und dem hohen Geschwindigkeitswert VSH vorgesehen sein. Im hier beschriebenen Beispiel beträgt der niedrige Geschwindigkeitswert VSN 80 km/h, der mittlere Geschwindigkeitswert VSM beträgt 100 km/h und der hohe Geschwindigkeitswert VSH beträgt 120 km/h. In anderen Ausführungsbeispielen sind für den jeweiligen Geschwindigkeitswert VSN, VSM, VSH auch andere Werte möglich.

In einer möglichen Ausführungsform des Verfahrens kann vorgesehen sein, dass die Gesamtstreckenlänge und/oder die Geschwindigkeitswerte VSN, VSM, VSH für die Setzgeschwindigkeit VS und/oder der Streckengrenzwert für den Bereich mit dem Verkehrszustand freier Verkehr FV und/oder der kleine Streckengrenzwert für den Bereich mit dem Verkehrszustand zähfließender und/oder stockender Verkehr ZSV und/oder der große Streckengrenzwert für den Bereich mit dem Verkehrszustand zähfließender und/oder stockender Verkehr ZSV und/oder der Streckengrenzwert für den Bereich mit dem Verkehrszustand gestauter Verkehr GV von einem Fahrzeugeigentümer und/oder Fahrzeugbesitzer und/oder Fahrzeugnutzer und/oder von einer fahrzeugexternen technischen Einrichtung, insbesondere von einem fahrzeugexternen Server, insbesondere von einer fahrzeugexternen technischen Einrichtung eines Herstellers des Fahrzeugs, vorgegeben werden können.

Beispielsweise kann vorgesehen sein, dass die Geschwindigkeitswerte VSN, VSM, VSH für die Setzgeschwindigkeit VS, auf die insbesondere jeweils abgebremst werden sollte, zeitlich-räumlich über eine solche fahrzeugexterne technische Einrichtung, beispielsweise über den fahrzeugexternen Server, insbesondere über einen cloudbasierten Dienst, übertragen werden. Dadurch können beispielsweise spezifische Ländereigenschaften, insbesondere spezifische Vorgaben eines jeweiligen Landes, in welchem sich das Fahrzeug aktuell befindet, zum Beispiel Geschwindigkeitsbegrenzungen, und/oder beispielsweise streckenspezifische Geschwindigkeitsbegrenzungen berücksichtigt werden. Alternativ oder zusätzlich können über eine solche fahrzeugexterne technische Einrichtung, beispielsweise über den fahrzeugexternen Server, insbesondere über den cloudbasierten Dienst, beispielsweise auch Testergebnisse aus Flottendaten und/oder Rückmeldungen anderer Fahrzeugnutzer in die Vorgabe der Geschwindigkeitswerte VSN, VSM, VSH für die Setzgeschwindigkeit VS einfließen, d. h. hierzu berücksichtigt werden. Dadurch können beispielsweise mehr Geschwindigkeitswerte vorgegeben werden, insbesondere zusätzliche Geschwindigkeitswerte zwischen dem niedrigen Geschwindigkeitswert VSN und dem hohen Geschwindigkeitswert VSH, um dadurch eine differenziertere Vorgabe der jeweiligen Setzgeschwindigkeit VS zu ermöglichen. Beispielsweise sind dadurch Geschwindigkeitswerte für die Setzgeschwindigkeit VS in 5 km/h-Intervallen möglich.

In einer möglichen Ausführungsform des Verfahrens kann beispielsweise vorgesehen sein, dass zusätzlich in Abhängigkeit von Sensordaten einer Umfelderfassungssensorik des Fahrzeugs entschieden wird, ob die Setzgeschwindigkeit VS vom Assistenzsystem festgelegt werden soll und auf welchen von mehreren vorgegebenen Geschwindigkeitswerten VSN, VSM, VSH die Setzgeschwindigkeit VS gesetzt werden soll. Dadurch kann ein fehlerhaftes Setzen der Setzgeschwindigkeit VS und somit beispielsweise ein unnötiges Abbremsen des Fahrzeugs bei geringem Verkehr in der Umgebung des Fahrzeugs oder ein zu geringes Abbremsen des Fahrzeugs bei einem bereits in der Umgebung des Fahrzeugs vorliegenden hohen Verkehrsaufkommen vermieden werden. Die Festlegung der Setzgeschwindigkeit VS des Assistenzsystems wird dann beispielsweise mit einer aus Sensoren, zum Beispiel Kamera und Radar, der Umfelderfassungssensorik des Fahrzeugs bekannten Objektliste in der Umgebung des Fahrzeugs abgeglichen zur Vermeidung falscher und zu starker Bremseingriffe, beispielsweise wenn der Verkehr so schwach ist, dass keine anderen Fahrzeuge in der Umgebung vorhanden sind, oder wenn im Gegensatz dazu beispielsweise anhand mehrerer überholender Objekte festgestellt wird, dass bereits ein dichter Verkehr in der Fahrzeugumgebung vorliegt.

Zusätzlich zu den oben beschriebenen Kriterien zur Entscheidung, ob die Setzgeschwindigkeit VS vom Assistenzsystem festgelegt werden soll und auf welchen von mehreren vorgegebenen Geschwindigkeitswerten VSN, VSM, VSH die Setzgeschwindigkeit VS gesetzt werden soll, kann beispielsweise vorgesehen sein, dass auch eine aktive Stauendewarnung ("Gefährliches Stauende voraus."), insbesondere mit einer akustischen Warnungsausgabe, berücksichtigt wird. Erfolgt eine solche Stauendewarnung, kann beispielsweise vorgesehen sein, dass dann entschieden wird, dass die Setzgeschwindigkeit VS vom Assistenzsystem festgelegt werden soll und dass sie auf einen vorgegebenen sehr niedrigen Geschwindigkeitswert von beispielsweise 60 km/h gesetzt werden soll. Beispielsweise kann vorgesehen sein, dass dieser sehr niedrige Geschwindigkeitswert parametrierbar ist, d. h. beispielsweise vom Fahrzeugeigentümer und/oder Fahrzeugbesitzer und/oder Fahrzeugnutzer und/oder von der fahrzeugexternen technischen Einrichtung, insbesondere vom fahrzeugexternen Server, insbesondere von der fahrzeugexternen technischen Einrichtung des Herstellers des Fahrzeugs, vorgegeben werden kann.

Alternativ oder zusätzlich zur oben beschriebenen Entscheidung, ob die Setzgeschwindigkeit VS vom Assistenzsystem festgelegt werden soll und auf welchen von mehreren vorgegebenen Geschwindigkeitswerten VSN, VSM, VSH die Setzgeschwindigkeit VS gesetzt werden soll, und insbesondere Übermittlung dieser Entscheidung an das Assistenzsystem kann beispielsweise an Stelle der Entscheidung zum Setzen der Setzgeschwindigkeit VS oder zusätzlich zu dieser eine aktive Bremsempfehlung, beispielsweise durch eine optische, insbesondere grafische, und/oder akustische und/oder haptische Meldung, ausgegeben werden. Dies ist beispielsweise vorteilhaft für Fahrzeuge, die kein entsprechendes Assistenzsystem, insbesondere kein Bremsassistenzsystem und/oder keine Abstands- und/oder Geschwindigkeitsregelanlage aufweisen.

Das oben beschriebene Verfahren kann beispielsweise für einen manuellen, d. h. vollständig durch einen Fahrzeugführer durchgeführten Fahrbetrieb, für einen durch ein oder mehrere Assistenzsysteme unterstützten Fahrbetrieb, für einen teilautomatisierten, für einen vollautomatisierten und/oder für einen autonomen Fahrbetrieb vorgesehen sein, d. h. vorteilhafterweise für alle Varianten des Fahrbetriebs.

Beispielsweise ist vorgesehen, dass die mittels des Verfahrens realisierte oder realisierbare Funktion des vorausschauenden Abbremsens, d. h. das automatische Setzen einer Setzgeschwindigkeit VS, welche beispielsweise von einer durch den Fahrzeugnutzer und/oder Fahrzeugführer vorgegebenen Setzgeschwindigkeit abweicht, dem Fahrzeugnutzer und/oder Fahrzeugführer angezeigt wird, zum Beispiel in einem Kombiinstrument des Fahrzeugs. Dadurch ist der Fahrzeugnutzer und/oder Fahrzeugführer informiert und nicht irritiert über beispielsweise eine Bremsung des Fahrzeugs, obwohl ein größeres Verkehrsaufkommen für den Fahrzeugnutzer und/oder Fahrzeugführer noch nicht in Sicht ist.

## Patentansprüche

1. Verfahren zur Bestimmung einer Setzgeschwindigkeit (VS) eines Assistenzsystems zur Regelung einer Längsbewegung eines Fahrzeugs, wobei eine dem Fahrzeug vorausliegende Fahrstrecke (FS) mit einer vorgegebenen Gesamtstreckenlänge dahingehend geprüft wird, ob auf dieser Gesamtstreckenlänge
- Bereiche mit einem Verkehrszustand freier Verkehr (FV),
- Bereiche mit einem Verkehrszustand zähfließender und/oder stockender Verkehr (ZSV),
- Bereiche mit einem Verkehrszustand gestauter Verkehr (GV) vorliegen,
eine Streckenlänge (LFV, LZSV, LGV) des jeweiligen Bereichs ermittelt wird,
und abhängig hiervon entschieden wird, ob die Setzgeschwindigkeit (VS) vom Assistenzsystem festgelegt werden soll und auf welchen von mehreren vorgegebenen Geschwindigkeitswerten (VSN, VSM, VSH) die Setzgeschwindigkeit (VS) gesetzt werden soll,
**dadurch gekennzeichnet, dass**
entschieden wird, dass die Setzgeschwindigkeit (VS) vom Assistenzsystem festgelegt werden soll,
wenn zu Beginn der geprüften vorausliegenden Fahrstrecke (FS) ein Bereich mit dem Verkehrszustand freier Verkehr (FV) vorliegt, dessen Streckenlänge (LFV) kleiner ist als ein vorgegebener Streckengrenzwert für den Bereich mit dem Verkehrszustand freier Verkehr (FV),
und wenn
- direkt danach ein Bereich mit dem Verkehrszustand gestauter Verkehr (GV) vorliegt, dessen Streckenlänge (LGV) größer ist als ein vorgegebener Streckengrenzwert für den Bereich mit dem Verkehrszustand gestauter Verkehr (GV), oder
- direkt danach ein Bereich mit dem Verkehrszustand zähfließender und/oder stockender Verkehr (ZSV) vorliegt, dessen Streckenlänge (LZSV) größer ist als ein vorgegebener kleiner Streckengrenzwert für den Bereich mit dem Verkehrszustand zähfließender und/oder stockender Verkehr (ZSV), oder
- direkt danach ein Bereich mit dem Verkehrszustand zähfließender und/oder stockender Verkehr (ZSV) vorliegt, dessen Streckenlänge (LZSV) kleiner ist als der vorgegebene kleine Streckengrenzwert für den Bereich mit dem Verkehrszustand zähfließender und/oder stockender Verkehr (ZSV), und direkt danach ein Bereich mit dem Verkehrszustand gestauter Verkehr (GV) vorliegt, dessen Streckenlänge (LGV) größer ist als der vorgegebene Streckengrenzwert für den Bereich mit dem Verkehrszustand gestauter Verkehr (GV), oder
- direkt danach ein Bereich mit dem Verkehrszustand zähfließender und/oder stockender Verkehr (ZSV) vorliegt, dessen Streckenlänge (LZSV) kleiner ist als der vorgegebene kleine Streckengrenzwert für den Bereich mit dem Verkehrszustand zähfließender und/oder stockender Verkehr (ZSV), direkt danach ein Bereich mit dem Verkehrszustand gestauter Verkehr (GV) vorliegt, dessen Streckenlänge (LGV) kleiner ist als der vorgegebene Streckengrenzwert für den Bereich mit dem Verkehrszustand gestauter Verkehr (GV), und direkt danach ein Bereich mit dem Verkehrszustand zähfließender und/oder stockender Verkehr (ZSV) vorliegt, dessen Streckenlänge (LZSV) kleiner ist als der vorgegebene kleine Streckengrenzwert für den Bereich mit dem Verkehrszustand zähfließender und/oder stockender Verkehr (ZSV), oder
- direkt danach ein Bereich mit dem Verkehrszustand gestauter Verkehr (GV) vorliegt, dessen Streckenlänge (LGV) kleiner ist als der vorgegebene Streckengrenzwert für den Bereich mit dem Verkehrszustand gestauter Verkehr (GV), direkt danach ein Bereich mit dem Verkehrszustand zähfließender und/oder stockender Verkehr (ZSV) vorliegt, dessen Streckenlänge (LZSV) kleiner ist als der vorgegebene kleine Streckengrenzwert für den Bereich mit dem Verkehrszustand zähfließender und/oder stockender Verkehr (ZSV), und direkt danach ein Bereich mit dem Verkehrszustand gestauter Verkehr (GV) vorliegt, dessen Streckenlänge (LGV) kleiner ist als der vorgegebene Streckengrenzwert für den Bereich mit dem Verkehrszustand gestauter Verkehr (GV), oder
- direkt danach ein Bereich mit dem Verkehrszustand gestauter Verkehr (GV) vorliegt, dessen Streckenlänge (LGV) kleiner ist als der vorgegebene Streckengrenzwert für den Bereich mit dem Verkehrszustand gestauter Verkehr (GV), und direkt danach ein Bereich mit dem Verkehrszustand zähfließender und/oder stockender Verkehr vorliegt (ZSV), dessen Streckenlänge (LZSV) größer ist als der vorgegebene kleine Streckengrenzwert für den Bereich mit dem Verkehrszustand zähfließender und/oder stockender Verkehr (ZSV).

2. Verfahren nach Anspruch 1,
**dadurch gekennzeichnet, dass**
die Gesamtstreckenlänge mindestens 2,5 km beträgt, insbesondere mindestens 3 km, insbesondere mindestens 3,5 km, insbesondere größer ist als 3,5 km.

3. Verfahren nach einem der vorhergehenden Ansprüche,
**dadurch gekennzeichnet, dass**
als Geschwindigkeitswerte (VSN, VSM, VSH) für die Setzgeschwindigkeit (VS) ein niedriger Geschwindigkeitswert (VSN), insbesondere 80 km/h, ein mittlerer Geschwindigkeitswert (VSM), insbesondere 100 km/h, und ein hoher Geschwindigkeitswert (VSH), insbesondere 120 km/h, vorgegeben werden.

4. Verfahren nach Anspruch 3,
**dadurch gekennzeichnet, dass**
entschieden wird, dass die Setzgeschwindigkeit (VS) auf den niedrigen Geschwindigkeitswert (VSN), insbesondere 80 km/h, gesetzt werden soll, wenn zu Beginn der geprüften vorausliegenden Fahrstrecke (FS) ein Bereich mit dem Verkehrszustand freier Verkehr (FV) vorliegt, dessen Streckenlänge (LFV) kleiner ist als der vorgegebene Streckengrenzwert für den Bereich mit dem Verkehrszustand freier Verkehr (FV), und wenn
- direkt danach ein Bereich mit dem Verkehrszustand gestauter Verkehr (GV) vorliegt, dessen Streckenlänge (LGV) größer ist als der vorgegebene Streckengrenzwert für den Bereich mit dem Verkehrszustand gestauter Verkehr (GV), oder
- direkt danach ein Bereich mit dem Verkehrszustand zähfließender und/oder stockender Verkehr (ZSV) vorliegt, dessen Streckenlänge (LZSV) kleiner ist als der vorgegebene kleine Streckengrenzwert für den Bereich mit dem Verkehrszustand zähfließender und/oder stockender Verkehr (ZSV), und direkt danach ein Bereich mit dem Verkehrszustand gestauter Verkehr (GV) vorliegt, dessen Streckenlänge (LGV) größer ist als der vorgegebene Streckengrenzwert für den Bereich mit dem Verkehrszustand gestauter Verkehr (GV).

5. Verfahren nach einem der Ansprüche 3 bis 4,
**dadurch gekennzeichnet, dass**
entschieden wird, dass die Setzgeschwindigkeit (VS) auf den mittleren Geschwindigkeitswert (VSM), insbesondere 100 km/h, gesetzt werden soll, wenn zu Beginn der geprüften vorausliegenden Fahrstrecke (FS) ein Bereich mit dem Verkehrszustand freier Verkehr (FV) vorliegt, dessen Streckenlänge (LFV) kleiner ist als der vorgegebene Streckengrenzwert für den Bereich mit dem Verkehrszustand freier Verkehr (FV), und wenn
- direkt danach ein Bereich mit dem Verkehrszustand zähfließender und/oder stockender Verkehr (ZSV) vorliegt, dessen Streckenlänge (LZSV) größer ist als der vorgegebene kleine Streckengrenzwert für den Bereich mit dem Verkehrszustand zähfließender und/oder stockender Verkehr (ZSV) und kleiner ist als ein vorgegebener großer Streckengrenzwert für den Bereich mit dem Verkehrszustand zähfließender und/oder stockender Verkehr (ZSV), und direkt danach ein Bereich mit dem Verkehrszustand gestauter Verkehr (GV) vorliegt, dessen Streckenlänge (LGV) größer ist als der vorgegebene Streckengrenzwert für den Bereich mit dem Verkehrszustand gestauter Verkehr (GV), oder
- direkt danach ein Bereich mit dem Verkehrszustand zähfließender und/oder stockender Verkehr (ZSV) vorliegt, dessen Streckenlänge (LZSV) kleiner ist als der vorgegebene kleine Streckengrenzwert für den Bereich mit dem Verkehrszustand zähfließender und/oder stockender Verkehr (ZSV), direkt danach ein Bereich mit dem Verkehrszustand gestauter Verkehr (GV) vorliegt, dessen Streckenlänge (LGV) kleiner ist als der vorgegebene Streckengrenzwert für den Bereich mit dem Verkehrszustand gestauter Verkehr (GV), und direkt danach ein Bereich mit dem Verkehrszustand zähfließender und/oder stockender Verkehr (ZSV) vorliegt, dessen Streckenlänge (LZSV) kleiner ist als der vorgegebene kleine Streckengrenzwert für den Bereich mit dem Verkehrszustand zähfließender und/oder stockender Verkehr (ZSV), oder
- direkt danach ein Bereich mit dem Verkehrszustand gestauter Verkehr (GV) vorliegt, dessen Streckenlänge (LGV) kleiner ist als der vorgegebene Streckengrenzwert für den Bereich mit dem Verkehrszustand gestauter Verkehr (GV), direkt danach ein Bereich mit dem Verkehrszustand zähfließender und/oder stockender Verkehr (ZSV) vorliegt, dessen Streckenlänge (LZSV) kleiner ist als der vorgegebene kleine Streckengrenzwert für den Bereich mit dem Verkehrszustand zähfließender und/oder stockender Verkehr (ZSV), und direkt danach ein Bereich mit dem Verkehrszustand gestauter Verkehr (GV) vorliegt, dessen Streckenlänge (LGV) kleiner ist als der vorgegebene Streckengrenzwert für den Bereich mit dem Verkehrszustand gestauter Verkehr (GV).

6. Verfahren nach einem der Ansprüche 3 bis 5,
**dadurch gekennzeichnet, dass**
entschieden wird, dass die Setzgeschwindigkeit (VS) auf den hohen Geschwindigkeitswert (VSH), insbesondere 120 km/h, gesetzt werden soll, wenn zu Beginn der geprüften vorausliegenden Fahrstrecke (FS) ein Bereich mit dem Verkehrszustand freier Verkehr (FV) vorliegt, dessen Streckenlänge (LFV) kleiner ist als der vorgegebene Streckengrenzwert für den Bereich mit dem Verkehrszustand freier Verkehr (FV), und wenn
- direkt danach ein Bereich mit dem Verkehrszustand zähfließender und/oder stockender Verkehr (ZSV) vorliegt, dessen Streckenlänge (LZSV) größer ist als der vorgegebene kleine Streckengrenzwert für den Bereich mit dem Verkehrszustand zähfließender und/oder stockender Verkehr (ZSV), und insbesondere direkt danach ein Bereich mit dem Verkehrszustand freier Verkehr (FV) vorliegt, oder
- direkt danach ein Bereich mit dem Verkehrszustand gestauter Verkehr (GV) vorliegt, dessen Streckenlänge (LGV) kleiner ist als der vorgegebene Streckengrenzwert für den Bereich mit dem Verkehrszustand gestauter Verkehr (GV), direkt danach ein Bereich mit dem Verkehrszustand zähfließender und/oder stockender Verkehr (ZSV) vorliegt, dessen Streckenlänge (LZSV) größer ist als der vorgegebene kleine Streckengrenzwert für den Bereich mit dem Verkehrszustand zähfließender und/oder stockender Verkehr (ZSV), und insbesondere direkt danach ein Bereich mit dem Verkehrszustand freier Verkehr (FV) vorliegt, oder
- direkt danach ein Bereich mit dem Verkehrszustand zähfließender und/oder stockender Verkehr (ZSV) vorliegt, dessen Streckenlänge (LZSV) größer ist als der vorgegebene kleine Streckengrenzwert für den Bereich mit dem Verkehrszustand zähfließender und/oder stockender Verkehr (ZSV), direkt danach ein Bereich mit dem Verkehrszustand gestauter Verkehr (GV) vorliegt, dessen Streckenlänge (LGV) kleiner ist als der vorgegebene Streckengrenzwert für den Bereich mit dem Verkehrszustand gestauter Verkehr (GV), und insbesondere direkt danach ein Bereich mit dem Verkehrszustand freier Verkehr (FV) vorliegt.

7. Verfahren nach einem der vorhergehenden Ansprüche,
**dadurch gekennzeichnet, dass**
- der vorgegebene Streckengrenzwert für den Bereich mit dem Verkehrszustand freier Verkehr (FV) 2 km beträgt, und/oder
- der vorgegebene kleine Streckengrenzwert für den Bereich mit dem Verkehrszustand zähfließender und/oder stockender Verkehr (ZSV) 500 m beträgt, und/oder
- der vorgegebene große Streckengrenzwert für den Bereich mit dem Verkehrszustand zähfließender und/oder stockender Verkehr (ZSV) 1 km beträgt, und/oder
- der vorgegebene Streckengrenzwert für den Bereich mit dem Verkehrszustand gestauter Verkehr (GV) 500 m beträgt.

8. Verfahren nach einem der vorhergehenden Ansprüche,
**dadurch gekennzeichnet, dass**
die Gesamtstreckenlänge und/oder die Geschwindigkeitswerte (VSN, VSM, VSH) für die Setzgeschwindigkeit (VS) und/oder der Streckengrenzwert für den Bereich mit dem Verkehrszustand freier Verkehr (FV) und/oder der kleine Streckengrenzwert für den Bereich mit dem Verkehrszustand zähfließender und/oder stockender Verkehr (ZSV) und/oder der große Streckengrenzwert für den Bereich mit dem Verkehrszustand zähfließender und/oder stockender Verkehr (ZSV) und/oder der Streckengrenzwert für den Bereich mit dem Verkehrszustand gestauter Verkehr (GV) von einem Fahrzeugeigentümer und/oder Fahrzeugbesitzer und/oder Fahrzeugnutzer und/oder von einer fahrzeugexternen technischen Einrichtung, insbesondere von einem fahrzeugexternen Server, insbesondere von einer fahrzeugexternen technischen Einrichtung eines Herstellers des Fahrzeugs, vorgegeben werden können.

9. Verfahren nach einem der vorhergehenden Ansprüche,
**dadurch gekennzeichnet, dass**
zusätzlich in Abhängigkeit von Sensordaten einer Umfelderfassungssensorik des Fahrzeugs entschieden wird, ob die Setzgeschwindigkeit (VS) vom Assistenzsystem festgelegt werden soll und auf welchen von mehreren vorgegebenen Geschwindigkeitswerten (VSN, VSM, VSH) die Setzgeschwindigkeit (VS) gesetzt werden soll.

## Claims

1. Method for determining a set speed (VS) of an assistance system for controlling a longitudinal movement of a vehicle, wherein
a route (FS) ahead of the vehicle with a specified total route length is checked to see whether on this total route length there are
- regions with a traffic condition of free-flowing traffic (FV),
- regions with a traffic condition of slow-moving and/or heavy traffic (ZSV),
- regions with a traffic condition of congested traffic (GV),
a route length (LFV, LZSV, LGV) of the relevant region is determined, and depending thereon a decision is made as to whether the set speed (VS) is to be determined by the assistance system and to which of a plurality of specified speed values (VSN, VSM, VSH) the set speed (VS) is to be set,
**characterized in that**
it is decided that the set speed (VS) is to be determined by the assistance system,
if, at the beginning of the checked route (FS) ahead, there is a region with the traffic condition of free-flowing traffic (FV), the route length (LFV) of which is less than a specified route limit value for the region with the traffic condition of free-flowing traffic (FV), and if
- immediately after this there is a region with the traffic condition of congested traffic (GV), the route length (LGV) of which is greater than a specified route limit value for the region with the traffic condition of congested traffic (GV), or
- immediately after this there is a region with the traffic condition of slow-moving and/or heavy traffic (ZSV), the route length (LZSV) of which is greater than a specified low route limit value for the region with the traffic condition of slow-moving and/or heavy traffic (ZSV), or
- immediately after this there is a region with the traffic condition of slow-moving and/or heavy traffic (ZSV), the route length (LZSV) of which is less than the specified low route limit value for the region with the traffic condition of slow-moving and/or heavy traffic (ZSV), and immediately after this there is a region with the traffic condition of congested traffic (GV), the route length (LGV) of which is greater than the specified route limit value for the region with the traffic condition of congested traffic (GV), or
- immediately after this there is a region with the traffic condition of slow-moving and/or heavy traffic (ZSV), the route length (LZSV) of which is less than the specified low route limit value for the region with the traffic condition of slow-moving and/or heavy traffic (ZSV), immediately after this there is a region with the traffic condition of congested traffic (GV), the route length (LGV) of which is less than the specified low route limit value for the region with the traffic condition of congested traffic (GV), and immediately after this there is a region with the traffic condition of slow-moving and/or heavy traffic (ZSV), the route length (LZSV) of which is less than the specified low route limit value for the region with the traffic condition of slow-moving and/or heavy traffic (ZSV), or
- immediately after this there is a region with the traffic condition of congested traffic (GV), the route length (LGV) of which is less than the specified route limit value for the region with the traffic condition of congested traffic (GV), immediately after this there is a region with the traffic condition of slow-moving and/or heavy traffic (ZSV), the route length (LZSV) of which is less than the specified low route limit value for the region with the traffic condition of slow-moving and/or heavy traffic (ZSV), and immediately after this there is a region with the traffic condition of congested traffic (GV), the route length (LGV) of which is less than the specified route limit value for the region with the traffic condition of congested traffic (GV), or
- immediately after this there is a region with the traffic condition of congested traffic (GV), the route length (LGV) of which is less than the specified route limit value for the region with the traffic condition of congested traffic (GV), and immediately after this there is a region with the traffic condition of slow-moving and/or heavy traffic (ZSV), the route length (LZSV) of which is greater than the specified low route limit value for the region with the traffic condition of slow-moving and/or heavy traffic (ZSV).

2. Method according to claim 1,
**characterized in that**
the total route length is at least 2.5 km, in particular at least 3 km, in particular at least 3.5 km, in particular greater than 3.5 km.

3. Method according to any of the preceding claims,
**characterized in that**
a low speed value (VSN), in particular 80 km/h, a medium speed value (VSM), in particular 100 km/h, and a high speed value (VSH), in particular 120 km/h, are specified as speed values (VSN, VSM, VSH) for the set speed (VS).

4. Method according to claim 3,
**characterized in that**
it is decided that the set speed (VS) is to be set to the low speed value (VSN), in particular 80 km/h, if at the beginning of the checked route (FS) ahead there is a region with the traffic condition of free-flowing traffic (FV), the route length (LFV) of which is less than the specified route limit value for the region with the traffic condition of free-flowing traffic (FV), and if
- immediately after this there is a region with the traffic condition of congested traffic (GV), the route length (LGV) of which is greater than the specified route limit value for the region with the traffic condition of congested traffic (GV), or
- immediately after this there is a region with the traffic condition of slow-moving and/or heavy traffic (ZSV), the route length (LZSV) of which is less than the specified low route limit value for the region with the traffic condition of slow-moving and/or heavy traffic (ZSV), and immediately after this there is a region with the traffic condition of congested traffic (GV), the route length (LGV) of which is greater than the specified route limit value for the region with the traffic condition of congested traffic (GV).

5. Method according to any of claims 3 to 4,
**characterized in that**
it is decided that the set speed (VS) is to be set to the average speed value (VSM), in particular 100 km/h, if at the beginning of the checked route (FS) ahead there is a region with the traffic condition of free-flowing traffic (FV), the route length (LFV) of which is less than the specified route limit value for the region with the traffic condition of free-flowing traffic (FV), and if
- immediately after this there is a region with the traffic condition of slow-moving and/or heavy traffic (ZSV), the route length (LZSV) of which is greater than the specified low route limit value for the region with the traffic condition of slow-moving and/or heavy traffic (ZSV) and is less than a specified large route limit value for the region with the traffic condition of slow-moving and/or heavy traffic (ZSV), and immediately after this there is a region with the traffic condition of congested traffic (GV), the route length (LGV) of which is greater than the specified route limit value for the region with the traffic condition of congested traffic (GV), or
- immediately after this there is a region with the traffic condition of slow-moving and/or heavy traffic (ZSV), the route length (LZSV) of which is less than the specified low route limit value for the region with the traffic condition of slow-moving and/or heavy traffic (ZSV), immediately after this there is a region with the traffic condition of congested traffic (GV), the route length (LGV) of which is less than the specified low route limit value for the region with the traffic condition of congested traffic (GV), and immediately after this there is a region with the traffic condition of slow-moving and/or heavy traffic (ZSV), the route length (LZSV) of which is less than the specified low route limit value for the region with the traffic condition of slow-moving and/or heavy traffic (ZSV), or
- immediately after this there is a region with the traffic condition of congested traffic (GV), the route length (LGV) of which is less than the specified route limit value for the region with the traffic condition of congested traffic (GV), immediately after this there is a region with the traffic condition of slow-moving and/or heavy traffic (ZSV), the route length (LZSV) of which is less than the specified low route limit value for the region with the traffic condition of slow-moving and/or heavy traffic (ZSV), and immediately after this there is a region with the traffic condition of congested traffic (GV),the route length (LGV) of which is less than the specified route limit value for the region with the traffic condition of congested traffic (GV).

6. Method according to any of claims 3 to 5,
**characterized in that**
it is decided that the set speed (VS) is to be set to the high speed value (VSH), in particular 120 km/h, if at the beginning of the checked route (FS) ahead there is a region with the traffic condition of free-flowing traffic (FV), the route length (LFV) of which is less than the specified route limit value for the region with the traffic condition of free-flowing traffic (FV), and if
- immediately after this there is a region with the traffic condition of slow-moving and/or heavy traffic (ZSV), the route length (LZSV) of which is greater than the specified low route limit value for the region with the traffic condition of slow-moving and/or heavy traffic (ZSV), and in particular immediately after this there is a region with the traffic condition of free-flowing traffic (FV), or
- immediately after this there is a region with the traffic condition of congested traffic (GV), the route length (LGV) of which is less than the specified route limit value for the region with the traffic condition of congested traffic (GV), immediately after this there is a region with the traffic condition of slow-moving and/or heavy traffic (ZSV), the route length (LZSV) of which is greater than the specified low route limit value for the region with the traffic condition of slow-moving and/or heavy traffic (ZSV), and in particular immediately after this there is a region with the traffic condition of free-flowing traffic (FV), or
- immediately after this there is a region with the traffic condition of slow-moving and/or heavy traffic (ZSV), the route length (LZSV) of which is greater than the specified low route limit value for the region with the traffic condition of slow-moving and/or heavy traffic (ZSV), immediately after this there is a region with the traffic condition of congested traffic (GV), the route length (LGV) of which is less than the predefined route limit value for the region with the traffic condition of congested traffic (GV), and in particular immediately after this there is a region with the traffic condition of free-flowing traffic (FV).

7. Method according to any of the preceding claims,
**characterized in that**
- the specified distance limit for the region with the traffic condition of free-flowing traffic (FV) is 2 km, and/or
- the specified low route limit value for the region with the traffic condition of slow-moving and/or congested traffic (ZSV) is 500 m, and/or
- the specified high route limit value for the region with the traffic condition of slow-moving and/or congested traffic (ZSV) is 1 km, and/or
- the specified route limit value for the region with the traffic condition of congested traffic (GV) is 500 m.

8. Method according to any of the preceding claims,
**characterized in that**
the total route length and/or the speed values (VSN, VSM, VSH) for the set speed (VS) and/or the route limit value for the region with the traffic condition of free-flowing traffic (FV) and/or the low route limit value for the region with the traffic condition of slow-moving and/or heavy traffic (ZSV) and/or the high route limit value for the region with the traffic condition of slow-moving and/or heavy traffic (ZSV) and/or the route limit value for the region with the traffic condition of congested traffic (GV) can be specified by a vehicle owner and/or vehicle possessor and/or vehicle user and/or by a technical device external to the vehicle, in particular by a server external to the vehicle, in particular by a technical device of a manufacturer of the vehicle that is external to the vehicle.

9. Method according to any of the preceding claims,
**characterized in that**
in addition, depending on sensor data from an environment detection sensor system of the vehicle, a decision is made as to whether the set speed (VS) is to be determined by the assistance system and to which of a plurality of specified speed values (VSN, VSM, VSH) the set speed (VS) is to be set.

## Revendications

1. Procédé de détermination d'une vitesse de réglage (VS) d'un système d'assistance pour la régulation d'un déplacement longitudinal d'un véhicule, dans lequel
un parcours (FS) devant le véhicule et d'une longueur de tronçon totale prédéfinie est examiné afin de déterminer s'il existe, sur cette longueur de tronçon totale
- des zones comportant un état de trafic à libre circulation (FV),
- des zones comportant un état de trafic à circulation ralentie et/ou en accordéon (ZSV),
- des zones comportant un état de trafic à circulation avec embouteillage (GV),
une longueur de tronçon (LFV, LZSV, LGV) de la zone respective est déterminée et, en fonction de celle-ci, il est décidé si la vitesse de réglage (VS) doit être fixée par le système d'assistance et à quelle valeur, parmi plusieurs valeurs de vitesse (VSN, VSM, VSH) prédéfinies, la vitesse de réglage (VS) doit être réglée,
**caractérisé en ce que**
il est décidé que la vitesse de réglage (VS) doit être fixée par le système d'assistance,
lorsque, au début du parcours (FS) vers l'avant examiné, il existe une zone comportant l'état de trafic à libre circulation (FV), dont la longueur de tronçon (LFV) est inférieure à une valeur limite de tronçon prédéfinie pour la zone comportant l'état de trafic à libre circulation (FV),
et lorsque
- directement après, il existe une zone comportant l'état de trafic à circulation avec embouteillage (GV), dont la longueur de tronçon (LGV) est supérieure à une valeur limite de tronçon prédéfinie pour la zone comportant l'état de trafic à circulation avec embouteillage (GV) ; ou
- directement après, il existe une zone comportant l'état de trafic à circulation ralentie et/ou en accordéon (ZSV), dont la longueur de tronçon (LZSV) est supérieure à une petite valeur limite de tronçon prédéfinie pour la zone comportant l'état de trafic à circulation ralentie et/ou en accordéon (ZSV), ou
- directement après, il existe une zone comportant l'état de trafic à circulation ralentie et/ou en accordéon (ZSV), dont la longueur de tronçon (LZSV) est inférieure à la petite valeur limite de tronçon prédéfinie pour la zone comportant l'état de trafic à circulation ralentie et/ou en accordéon (ZSV), et directement après, il existe une zone comportant l'état de trafic à circulation avec embouteillage (GV), dont la longueur de tronçon (LGV) est supérieure à la valeur limite de tronçon prédéfinie pour la zone comportant l'état de trafic à circulation avec embouteillage (GV), ou
- directement après, il existe une zone comportant l'état de trafic à circulation ralentie et/ou en accordéon (ZSV), dont la longueur de tronçon (LZSV) est inférieure à la petite valeur limite de tronçon prédéfinie pour la zone comportant l'état de trafic à circulation ralentie et/ou en accordéon (ZSV), directement après, il existe une zone comportant l'état de trafic à circulation avec embouteillage (GV), dont la longueur de tronçon (LGV) est inférieure à la valeur limite de tronçon prédéfinie pour la zone comportant l'état de trafic à circulation avec embouteillage (GV), et directement après, il existe une zone comportant l'état de trafic à circulation ralentie et/ou en accordéon (ZSV), dont la longueur de tronçon (LZSV) est inférieure à la petite valeur limite de tronçon prédéfinie pour la zone comportant l'état de trafic à circulation ralentie et/ou en accordéon (ZSV), ou
- directement après, il existe une zone comportant l'état de trafic à circulation avec embouteillage (GV), dont la longueur de tronçon (LGV) est inférieure à la valeur limite de tronçon prédéfinie pour la zone comportant l'état de trafic à circulation avec embouteillage (GV), directement après, il existe une zone comportant l'état de trafic à circulation ralentie et/ou en accordéon (ZSV), dont la longueur de tronçon (LZSV) est inférieure à la petite valeur limite de tronçon prédéfinie pour la zone comportant l'état de trafic à circulation ralentie et/ou en accordéon (ZSV), et directement après, il existe une zone comportant l'état de trafic à circulation avec embouteillage (GV), dont la longueur de tronçon (LGV) est inférieure à la valeur limite de tronçon prédéfinie pour la zone comportant l'état de trafic à circulation avec embouteillage (GV), ou
- directement après, il existe une zone comportant l'état de trafic à circulation avec embouteillage (GV), dont la longueur de tronçon (LGV) est inférieure à la valeur limite de tronçon prédéfinie pour la zone comportant l'état de trafic à circulation avec embouteillage (GV), et directement après, il existe une zone comportant l'état de trafic à circulation ralentie et/ou en accordéon (ZSV), dont la longueur de tronçon (LZSV) est supérieure à la petite valeur limite de tronçon prédéfinie pour la zone comportant l'état de trafic à circulation ralentie et/ou en accordéon (ZSV).

2. Procédé selon la revendication 1,
**caractérisé en ce que**
la longueur de tronçon totale est d'au moins 2,5 km, en particulier d'au moins 3 km, en particulier d'au moins 3,5 km, en particulier supérieure à 3,5 km.

3. Procédé selon l'une des revendications précédentes,
**caractérisé en ce que**
une valeur de vitesse basse (VSN), en particulier 80 km/h, une valeur de vitesse moyenne (VSM), en particulier 100 km/h, et une valeur de vitesse élevée (VSH), en particulier 120 km/h, sont prédéfinies comme valeurs de vitesse (VSN, VSM, VSH) pour la vitesse de réglage (VS).

4. Procédé selon la revendication 3,
**caractérisé en ce que**
il est décidé que la vitesse de réglage (VS) doit être réglée à la valeur de vitesse basse (VSN), en particulier 80 km/h, lorsqu'au début du parcours (FS) vers l'avant examiné, il existe une zone comportant l'état de trafic à libre circulation (FV), dont la longueur de tronçon (LFV) est inférieure à la valeur limite de tronçon prédéfinie pour la zone comportant l'état de trafic à libre circulation (FV) et lorsque
- directement après, il existe une zone comportant l'état de trafic à circulation avec embouteillage (GV), dont la longueur de tronçon (LGV) est supérieure à la valeur limite de tronçon prédéfinie pour la zone comportant l'état de trafic à circulation avec embouteillage (GV), ou
- directement après, il existe une zone comportant l'état de trafic à circulation ralentie et/ou en accordéon (ZSV), dont la longueur de tronçon (LZSV) est inférieure à la petite valeur limite de tronçon prédéfinie pour la zone comportant l'état de trafic à circulation ralentie et/ou en accordéon (ZSV), et directement après, il existe une zone comportant l'état de trafic à circulation avec embouteillage (GV), dont la longueur de tronçon (LGV) est supérieure à la valeur limite de tronçon prédéfinie pour la zone comportant l'état de trafic à circulation avec embouteillage (GV).

5. Procédé selon l'une des revendications 3 à 4,
**caractérisé en ce que**
il est décidé que la vitesse de réglage (VS) doit être réglée à la valeur de vitesse moyenne (VSM), en particulier 100 km/h, lorsqu'au début du parcours (FS) vers l'avant examiné, il existe une zone comportant l'état de trafic à libre circulation (FV), dont la longueur de tronçon (LFV) est inférieure à la valeur limite de tronçon prédéfinie pour la zone comportant l'état de trafic à libre circulation (FV), et lorsque
- directement après, il existe une zone comportant l'état de trafic à circulation ralentie et/ou en accordéon (ZSV), dont la longueur de tronçon (LZSV) est supérieure à la petite valeur limite de tronçon prédéfinie pour la zone comportant l'état de trafic à circulation ralentie et/ou en accordéon (ZSV) et inférieure à une grande valeur limite de tronçon prédéfinie pour la zone comportant l'état de trafic à circulation ralentie et/ou en accordéon (ZSV), et directement après, il existe une zone comportant l'état de trafic à circulation avec embouteillage (GV), dont la longueur de tronçon (LGV) est supérieure à la valeur limite de tronçon prédéfinie pour la zone comportant l'état de trafic à circulation avec embouteillage (GV), ou
- directement après, il existe une zone comportant l'état de trafic à circulation ralentie et/ou en accordéon (ZSV), dont la longueur de tronçon (LZSV) est inférieure à la petite valeur limite de tronçon prédéfinie pour la zone comportant l'état de trafic à circulation ralentie et/ou en accordéon (ZSV), directement après, il existe une zone comportant l'état de trafic à circulation avec embouteillage (GV), dont la longueur de tronçon (LGV) est inférieure à la valeur limite de tronçon prédéfinie pour la zone comportant l'état de trafic à circulation avec embouteillage (GV), et directement après, il existe une zone comportant l'état de trafic à circulation ralentie et/ou en accordéon (ZSV), dont la longueur de tronçon (LZSV) est inférieure à la petite valeur limite de tronçon prédéfinie pour la zone comportant l'état de trafic à circulation ralentie et/ou en accordéon (ZSV), ou
- directement après, il existe une zone comportant l'état de trafic à circulation avec embouteillage (GV), dont la longueur de tronçon (LGV) est inférieure à la valeur limite de tronçon prédéfinie pour la zone comportant l'état de trafic à circulation avec embouteillage (GV), directement après, il existe une zone comportant l'état de trafic à circulation ralentie et/ou en accordéon (ZSV), dont la longueur de tronçon (LZSV) est inférieure à la petite valeur limite de tronçon prédéfinie pour la zone comportant l'état de trafic à circulation ralentie et/ou en accordéon (ZSV), et directement après, il existe une zone comportant l'état de trafic à circulation avec embouteillage (GV), dont la longueur de tronçon (LGV) est inférieure à la valeur limite de tronçon prédéfinie pour la zone comportant l'état de trafic à circulation avec embouteillage (GV).

6. Procédé selon l'une des revendications 3 à 5,
**caractérisé en ce que**
il est décidé que la vitesse de réglage (VS) doit être réglée à la valeur de vitesse élevée (VSH), en particulier 120 km/h, lorsque, au début du parcours (FS) vers l'avant examiné, il existe une zone comportant l'état de trafic à libre circulation (FV), dont la longueur de tronçon (LFV) est inférieure à la valeur limite de tronçon prédéfinie pour la zone comportant l'état de trafic à libre circulation (FV), et lorsque
- directement après, il existe une zone comportant l'état de trafic à circulation ralentie et/ou en accordéon (ZSV), dont la longueur de tronçon (LZSV) est supérieure à la petite valeur limite de tronçon prédéfinie pour la zone comportant l'état de trafic à circulation ralentie et/ou en accordéon (ZSV), et en particulier directement après, il existe une zone comportant l'état de trafic à libre circulation (FV), ou
- directement après, il existe une zone comportant l'état de trafic à circulation avec embouteillage (GV), dont la longueur de tronçon (LGV) est inférieure à la valeur limite de tronçon prédéfinie pour la zone comportant l'état de trafic à circulation avec embouteillage (GV), directement après, il existe une zone comportant l'état de trafic à circulation ralentie et/ou en accordéon (ZSV), dont la longueur de tronçon (LZSV) est supérieure à la petite valeur limite de tronçon prédéfinie pour la zone comportant l'état de trafic à circulation ralentie et/ou en accordéon (ZSV), et en particulier directement après, il existe une zone comportant l'état de trafic à libre circulation (FV), ou
- directement après, il existe une zone comportant l'état de trafic à circulation ralentie et/ou en accordéon (ZSV), dont la longueur de tronçon (LZSV) est supérieure à la petite valeur limite de tronçon prédéfinie pour la zone comportant l'état de trafic à circulation ralentie et/ou en accordéon (ZSV), directement après, il existe une zone comportant l'état de trafic à circulation avec embouteillage (GV), dont la longueur de tronçon (LGV) est inférieure à la valeur limite de tronçon prédéfinie pour la zone comportant l'état de trafic à circulation avec embouteillage (GV), et en particulier directement après, il existe une zone comportant l'état de trafic à libre circulation (FV).

7. Procédé selon l'une des revendications précédentes,
**caractérisé en ce que**
- la valeur limite de tronçon prédéfinie pour la zone comportant l'état de trafic à libre circulation (FV) est de 2 km et/ou
- la petite valeur limite de tronçon prédéfinie pour la zone comportant l'état de trafic à circulation ralentie et/ou en accordéon (ZSV) est de 500 m et/ou
- la grande valeur limite de tronçon prédéfinie pour la zone comportant l'état de trafic à circulation ralentie et/ou en accordéon (ZSV) est de 1 km et/ou
- la valeur limite de tronçon prédéfinie pour la zone comportant l'état de trafic à circulation avec embouteillage (GV) est de 500 m.

8. Procédé selon l'une des revendications précédentes,
**caractérisé en ce que**
la longueur de tronçon totale et/ou les valeurs de vitesse (VSN, VSM, VSH) pour la vitesse de réglage (VS) et/ou la valeur limite de tronçon pour la zone comportant l'état de trafic à libre circulation (FV) et/ou la petite valeur limite de tronçon pour la zone comportant l'état de trafic à circulation ralentie et/ou en accordéon (ZSV) et/ou la grande valeur limite de tronçon pour la zone comportant l'état de trafic à circulation ralentie et/ou en accordéon (ZSV) et/ou la valeur limite de tronçon pour la zone comportant l'état de trafic à circulation avec embouteillage (GV) peuvent être prédéfinies par un propriétaire de véhicule et/ou un possesseur de véhicule et/ou un utilisateur de véhicule et/ou par un dispositif technique externe au véhicule, en particulier par un serveur externe au véhicule, en particulier par un dispositif technique externe au véhicule d'un constructeur du véhicule.

9. Procédé selon l'une des revendications précédentes,
**caractérisé en ce que**
en outre, en fonction de données de capteurs d'un système de capteurs de détection d'environnement du véhicule, il est décidé si la vitesse de réglage (VS) doit être fixée par le système d'assistance et à quelle valeur, parmi plusieurs valeurs de vitesse (VSN, VSM, VSH) prédéfinies, la vitesse de réglage (VS) doit être réglée.
